# EUROPEAN PATENT SPECIFICATION

(11) **EP 4 297 367 B1**
(45) Date of publication and mention of the grant of the patent: **11.11.2026**
(21) Application number: 22771783.2
(22) Date of filing: 17.03.2022
(51) Int. Cl.: H04L 51/56, G06F 21/31, H04L 12/28, H04L 51/58, H04L 51/046, H04L 51/18, H04L 12/18, H04L 51/02

(54) **MESSENGER CONNECTION METHOD IN MULTI-MESSENGER SERVICE ENVIRONMENT, AND DEVICE THEREFOR**
MESSENGER-VERBINDUNGSVERFAHREN IN EINER MULTI-MESSENGER-DIENSTUMGEBUNG UND VORRICHTUNG DAFÜR
PROCÉDÉ DE CONNEXION DE MESSAGERIE DANS UN ENVIRONNEMENT DE SERVICE MULTI-MESSAGERIE ET DISPOSITIF ASSOCIÉ

(30) Priority: 17.03.2021 KR 20210034863
(43) Date of publication of application: 27.12.2023
(73) Proprietor: Samsung Electronics Co., Ltd., Suwon-si, Gyeonggi-do 16677 (KR)
(72) Inventor: JANG, Moonseok, Suwon-si, Gyeonggi-do 16677 (KR); CHO, Hongjin, Suwon-si, Gyeonggi-do 16677 (KR); KIM, Nakkyong, Suwon-si, Gyeonggi-do 16677 (KR); NOH, Kwangjin, Suwon-si, Gyeonggi-do 16677 (KR); PARK, Zion, Suwon-si, Gyeonggi-do 16677 (KR); PARK, Jinhee, Suwon-si, Gyeonggi-do 16677 (KR); SEO, Beomho, Suwon-si, Gyeonggi-do 16677 (KR); YOO, Jaeman, Suwon-si, Gyeonggi-do 16677 (KR)
(74) Representative: Appleyard Lees IP LLP
(86) International application number: PCT/KR2022/003745
(87) International publication number: WO 2022/197117

(56) References cited:
- KR-A- 20060 124 890
- KR-A- 20110 014 920
- KR-A- 20150 013 531
- KR-B1- 101 844 585
- US-A1- 2003 101 343
- US-A1- 2008 113 679
- US-A1- 2010 071 053
- US-A1- 2014 055 552

## Description

### Technical Field

Various embodiments relate to a messenger connection method and apparatus in a multi-messenger service environment, and more specifically, to a server computing apparatus and a display device and operation method thereof which enable one or more messenger connections in a multi-messenger service environment.

### Background Art

Smart devices may use various social messenger applications. With various messenger applications, users may selectively use a messenger convenient for them by country, region, and age. In addition, the users do not use only one messenger application, but also use various types of messenger applications.

Users use social messenger applications mainly to communicate with other users, but recently they are able to exchange messages not only with other users but also virtual counterparts, such as channels or pages provided by a messenger platform.

In recent years, a technique for controlling a display device such as a television by using a messenger application has been proposed, but because users use various messenger applications, a method of creating a messenger connection with a display device by using different types of messenger applications is required.

Document US 2003/101343 A1 discloses a messaging communication system that includes a plurality of messaging clients in which a first messaging client establishes a first communication connection operating using a plurality of client data and the first messaging client transfers the plurality of client data to a second messaging client.

### Disclosure

### Technical Problem

Various embodiments aim to provide a method and apparatus for enabling users to establish a messenger connection with a display device by using a plurality of multi-messenger applications in a multi-messenger service environment where different types of messenger services are provided.

### Technical Solution

The invention describes a method of performing, in a server computing apparatus, a messenger connection control according to independent claim 1, and a corresponding operation method of a display device according to independent claim 4, server computing apparatus according to independent method claim 14 and display device according to independent method claim 15.

Additional aspects of the invention are to be found in the dependent claims.

### Advantageous Effects

According to various embodiments of the present disclosure, a messenger service connection server may conveniently provide a messenger connection between a user and a display device by using different types of messenger applications by creating messenger connections based on a plurality of messenger applications.

According to various embodiments of the present disclosure, the display device may provide customized and personalized information to a user that is messenger connected thereto by monitoring and accumulating information about behavior of the messenger connected user.

According to various embodiments of the present disclosure, an environment in which a user may more conveniently share content with other users may be provided by using a messenger system.

### Description of Drawings

FIG. 1 is a reference diagram for describing the concept of a system enabling one or more messenger connections between an electronic device and a display device, according to an embodiment.
FIG. 2 is a reference diagram for describing detailed configurations of devices included in a system enabling one or more messenger connections between an electronic device and a display device, according to an embodiment.
FIG. 3 is a detailed block diagram illustrating functions of a messenger connection service server according to an embodiment.
FIG. 4 is a detailed block diagram illustrating a function of configuring a messenger connection-based user environment of a display device, according to an embodiment.
FIG. 5 is a flowchart illustrating an example of a process of a method, performed by a messenger connection service server, of generating connection information indicating a connection relationship between an electronic device and a display device, according to an embodiment.
FIG. 6 is a flowchart illustrating a specific example of a process of a method, performed by a messenger connection service server, of generating connection information indicating a connection relationship between an electronic device and a display device, according to an embodiment.
FIG. 7 illustrates an example of a user interface on an electronic device requesting a connection by selecting a Samsung TV as an example of a display device on the electronic device, according to an embodiment.
FIG. 8 illustrates an example in which connection information for a messenger connection is generated for each of a plurality of users in a household, according to an embodiment.
FIG. 9 is an example of a flowchart for describing a process of a method of collecting information about a user's behavior after establishing a messenger connection between an electronic device and a display device, according to an embodiment.
FIG. 10 is an example of a flowchart for describing a process of a method, performed by a display device, of actively transmitting a recommendation message to a user, according to an embodiment.
FIG. 11 is a diagram for explaining an example of a content recommendation message that may be provided by a display device, according to an embodiment.
FIG. 12 is a diagram for explaining another example of a content recommendation message that may be provided by a display device, according to an embodiment.
FIG. 13 is an example of a process of a method of switching to a messenger connection mode during operation in a family mode, according to an embodiment.
FIG. 14 is a diagram illustrating an example of a process of logging in to an application by referring to profile information about a user in a messenger connection mode, according to an embodiment.
FIG. 15 is a reference diagram for describing an example of executing an application by using login information for each user, according to an embodiment.
FIG. 16 is a reference diagram for describing an example in which a display device explicitly changes a messenger connected user during operation in a messenger connection mode corresponding to the messenger connected user, according to embodiments.
FIG. 17 is a flowchart illustrating an example of a process of switching from a messenger connection mode to a family mode, according to an embodiment.
FIG. 18 is a reference diagram for describing an example in which a configuration of a home screen of a display device changes when the display device switches from a messenger connection mode to a family mode, according to an embodiment.
FIG. 19 is a flowchart illustrating an example of a process of switching to a family mode when a display device is powered off, according to an embodiment.
FIG. 20 is a flowchart illustrating a process of a processing method when a display device receives a voice message via a messenger system, according to an embodiment.
FIG. 21 is a flowchart illustrating an example of a process of a method for allowing one user to watch content together with another user by using a messenger connection system, according to an embodiment.
FIG. 22 illustrates examples of user interfaces on a first electronic device during a process in which a first user makes a sharing request for sharing content being played on a first display device with a second user, according to an embodiment.
FIG. 23 illustrates examples of user interfaces on a first electronic device during a process in which a first user makes a sharing request for sharing content being played on a first display device with a second user, according to an embodiment.
FIG. 24 illustrates examples of user interfaces displayed on a second user's electronic device in response to a sharing request made by a first user to share content played on a first display device with a second user, according to an embodiment.
FIG. 25 illustrates an example of multi-view screens respectively displayed on a first display device of a first user and a second display device of a second user in response to a sharing request made by the first user to share content played on the first display device with the second user, according to an embodiment.
FIG. 26 is a flowchart illustrating a method of transmitting and receiving chat messages after creating a watch together chat window, according to an embodiment.

### Mode for Invention

Terms used in the present specification will now be briefly described and then the present disclosure will be described in detail.

The terms used in the present disclosure may be general terms currently widely used in the art based on functions described in the present disclosure, but may be changed according to an intention of a technician engaged in the art, precedent cases, advent of new technologies, etc. Furthermore, specific terms may be arbitrarily selected by the applicant, and in this case, the meaning of the selected terms will be described in detail in the detailed description of the present disclosure. Thus, the terms used herein should be defined not by simple appellations thereof but based on the meaning of the terms together with the overall description of the present disclosure.

Throughout the specification, when a part "includes" or "comprises" an element, unless there is a particular description contrary thereto, it is understood that the part may further include other elements, not excluding the other elements. In addition, terms such as "portion", "module", etc., described in the specification refer to a unit for processing at least one function or operation and may be embodied as hardware or software, or a combination of hardware and software.

Embodiments will now be described more fully hereinafter with reference to the accompanying drawings so that they may be easily implemented by one of ordinary skill in the art. However, the present disclosure may have different forms and should not be construed as being limited to embodiments set forth herein. In addition, parts not related to descriptions of the present disclosure are omitted to clearly explain the present disclosure in the drawings, and like reference numerals denote like elements throughout.

In an embodiment in the present specification, the term "user" refers to a person who controls a function or operation of a computing apparatus or an electronic device by using a control device, and may include a viewer, an administrator, or an installation engineer.

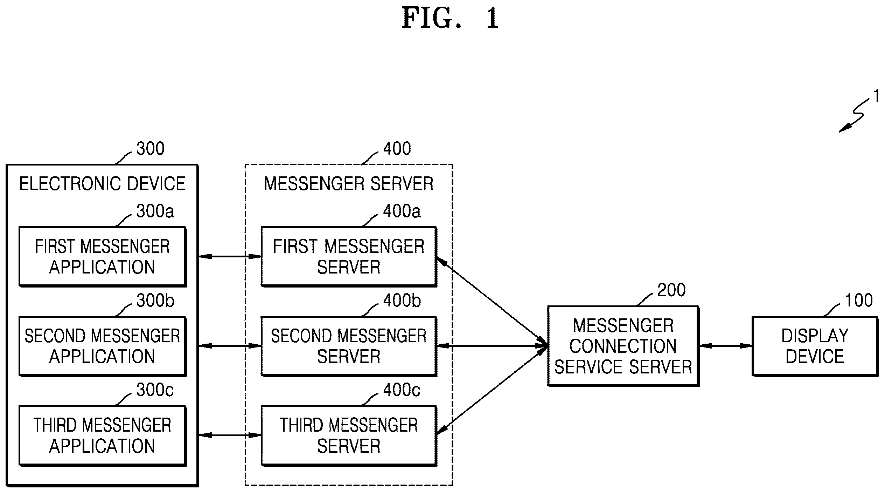

FIG. 1 is a reference diagram for describing the concept of a system 1 that enables one or more messenger connections between an electronic device and a display device, according to an embodiment.

Referring to FIG. 1, the system 1 may include a display device 100, a messenger connection service server 200, an electronic device 300, and a messenger server 400.

The electronic device 300 may represent a smart device through which a user is able to transmit a message to or receive a message from the display device 100 by using one or more messenger applications. The electronic device 300 may be a smartphone but is not limited thereto, and may be implemented as a device that includes a memory and a processor and performs a function according to a user's request. For example, the electronic device 300 may be implemented as various electronic devices, such as a mobile phone, a tablet personal computer (PC), a digital camera, a camcorder, a laptop computer, a desktop computer, an e-book terminal, a digital broadcasting terminal, a personal digital assistant (PDA), a portable multimedia player (PMP), a navigation device, an MP3 player, a wearable device, etc. Also, the electronic device 300 may be referred to as a portable device or a computing device according to the functionality of the electronic device 300.

The electronic device 300 may include one or more messenger applications, for example, a first messenger application 300a, a second messenger application 300b, and a third messenger application 300c. The user of the electronic device 300 may not only exchange messages with other users by using one or more installed messenger applications but also exchange messages with the display device 100 by using functions described in the present disclosure.

The messenger server 400 may represent a server computer for providing a messenger service. The messenger server 400 may include one or more messenger servers operated and managed by various operators or various service providers. For example, the messenger server 400 may include a first messenger server 400a, a second messenger server 400b, and a third messenger server 400c. Each of the first messenger server 400a, the second messenger server 400b, and the third messenger server 400c operated by different operators or different service providers may process messages via a message format or a message transmission path suitable for its own messenger system. For example, in the electronic device 300, when the user desires to transmit and receive messages by using the first messenger application 300a, the first messenger server 400a may provide a messenger service via a message format or a message transmission path suitable for a first messenger system. For example, in the electronic device 300, when the user desires to transmit and receive messages by using the second messenger application 300b, the second messenger server 400b may provide a messenger service via a message format or a message transmission path suitable for a second messenger system. Because the message format suitable for the first messenger system is different from the message format suitable for the second messenger system, the display device 100 needs to be equipped with applications or systems respectively corresponding to a plurality of messenger systems to establish
a messenger connection with the electronic device 300 via the plurality of messenger systems. However, when the display device has to have applications or systems respectively corresponding to the plurality of messenger systems, the operation complexity of the display device increases, and thus, embodiments disclosed herein propose a messenger connection service server that enables integration of a plurality of different messenger systems and processing of messages.

The messenger connection service server 200 may represent a server computer that enables a messenger connection between the electronic device 300 and the display device 100.

According to an embodiment, the messenger connection service server 200 may generate and manage messenger connection information indicating a messenger connection relationship between the electronic device 300 and the display device 100 in response to a messenger connection request from the electronic device 300 via the messenger server 400.

According to an embodiment, the messenger connection service server 200 may transmit messages from the plurality of messenger servers between the electronic device 300 and the display device 100 by distinguishing and processing different message formats respectively used by the plurality of messenger servers.

According to an embodiment, the messenger connection service server 200 may receive a request for connection to the display device 100 from the electronic device 300 via a messenger application, and identify a type of the messenger application used to receive the connection request.

According to an embodiment, when there is a messenger connection request from the electronic device 300, the messenger connection service server 200 may perform authentication of the electronic device 300 and the display device 100, and when the authentication is completed, generate messenger connection information indicating a messenger connection relationship between the electronic device 300 and the display device 100. According to an example, the messenger connection information may include messenger identification information indicating the identified type of messenger application, user identification information for identifying a user using the messenger application on the electronic device 300, and connected device identification information for identifying the display device 100.

According to an embodiment, the messenger connection service server 200 may perform a messenger conversion control between the electronic device and the display device based on the connection information generated in this way.

According to an embodiment, the display device 100 may be a television (TV) but is not limited thereto, and may be implemented as a device that includes a memory and a processor and displays an image according to a user's request. For example, the display device 100 may be implemented as various electronic devices, such as a mobile phone, a tablet PC, a digital camera, a camcorder, a laptop computer, a desktop computer, an e-book terminal, a digital broadcasting terminal, a PDA, a PMP, a navigation device, an MP3 player, a wearable device, etc. In addition, the display device 100 may be implemented in a stationary or portable form, and may be a digital broadcasting receiver capable of receiving digital broadcasts. The term "display device" is used to distinguish the display device from the electronic device 300 included in the system 1, and any type of device that performs functions of the display device in the present disclosure may be referred to as an electronic device, a computing device, or the like.

According to an embodiment, the display device 100 may include a messenger connection manager for managing a messenger connection from the electronic device 300 via the messenger server 400.

According to an embodiment, the display device 100 may receive from the messenger connection service server 200 and store messenger connection information including one or more messenger connection relationships of the display device 100.

According to an embodiment, the display device 100 may operate in a messenger connection mode based on the one or more messenger connection relationships included in the stored messenger connection information. For example, when the display device 100 operates in a messenger connection mode with a user who is messenger connected thereto, the display device 100 may provide a display device environment suitable for the messenger connected user, provide recommendation information suitable for the user, or automatically perform an application login operation by using prestored user's account login information.

According to an embodiment, the display device 100 may store information about behavior of the messenger connected user or its environment information in the messenger connection mode as profile information corresponding to corresponding messenger connection information.

According to an embodiment, when the messenger connection is released while the display device 100 is operating in the messenger connection mode, the display device 100 may switch to a family mode in which messenger connection information or profile information about the corresponding messenger connected user is no longer referred to.

According to an embodiment, the display device 100 may share content played by the display device 100 with another user's display device according to a user's request in the messenger connection mode.

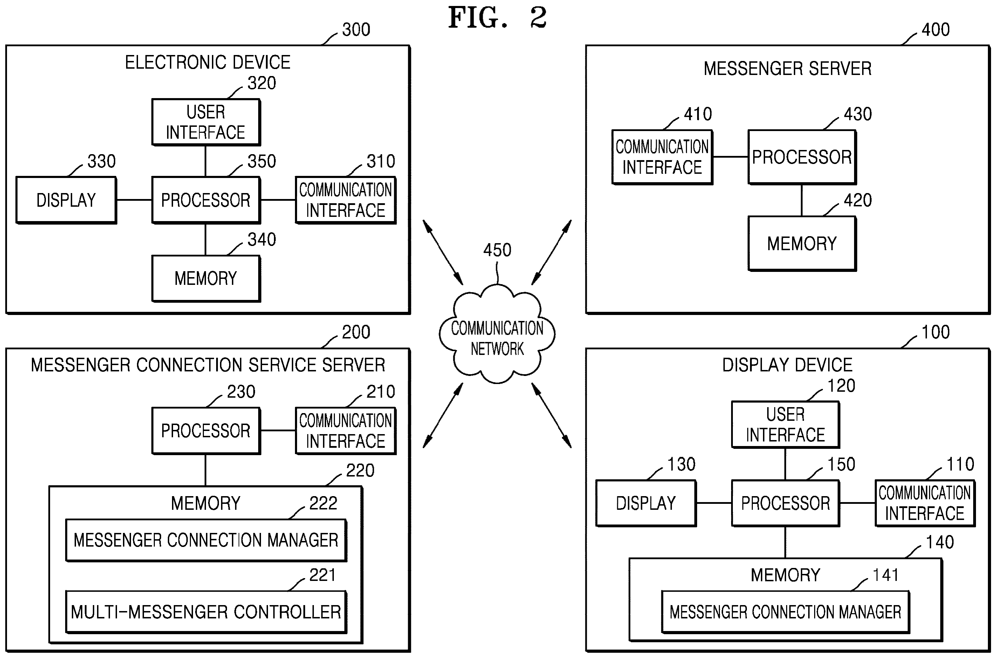

FIG. 2 is a reference diagram for describing detailed configurations of devices included in a system enabling one or more messenger connections between an electronic device and a display device, according to an embodiment.

Referring to FIG. 2, the system may include a display device 100, a messenger connection service server 200, an electronic device 300, a messenger server 400, and a communication network 450 connecting each device included in the system.

The electronic device 300 may include a communication interface 310, a user interface 320, a display 330, a memory 340, and a processor 350. However, the electronic device 300 may be implemented with more components than those shown in FIG. 2, and is not limited to the above example.

The communication interface 310 may communicate with the messenger server 400 over the communication network 450.

The user interface 320 may be any form of interface capable of receiving a user input. For example, the user interface 320 may be arranged on a portion of the electronic device 300 and include a manipulation button capable of receiving a user input, a light receiver capable of receiving an input from a remote control device, a touch input when the display is implemented as a touch sensitive display, a microphone for receiving a voice uttered by the user, etc.

The display 330 may output images or data processed by the electronic device 300.

The memory 340 may store programs necessary for processing or control by the processor 350, and store data input to or output from the electronic device 300.

The memory 340 may include at least one type of storage medium among a flash memory-type memory, a hard disk-type memory, a multimedia card micro-type memory, a card-type memory (e.g., an SD card or an XD memory), random access memory (RAM), static RAM (SRAM), read-only memory (ROM), electrically erasable programmable ROM (EEPROM), PROM, a magnetic memory, a magnetic disc, and an optical disc.

The processor 350 controls all operations of the electronic device 300. For example, the processor 350 may execute one or more instructions stored in the memory 340 to perform functions of the electronic device 300 described in the present disclosure.

In an embodiment of the present disclosure, the processor 350 may execute one or more instructions stored in the memory 340 to control the above-described operations to be performed. In this case, the memory 340 may store one or more instructions executable by the processor 350.

Also, in an embodiment of the present disclosure, the processor 350 may store one or more instructions in an internal memory provided therein and execute the one or more instructions stored in the internal memory to control the above-described operations to be performed. In other words, the processor 350 may execute at least one instruction or program stored in the internal memory provided in the processor 350 or the memory 340 to perform specified operations.

According to a request from the user of the electronic device 300, the electronic device 300 may add or set the display device 100 as a virtual friend by requesting creation of a connection relationship with the display device 100 using a messenger application installed on the electronic device 300.

The user of the electronic device 300 may use a messenger application to transmit a message to or receive a message from the display device 100 with which a connection relationship is created.

The electronic device 300 may be any type of device that performs functions by including a processor and a memory. The electronic device 100 may be a stationary or portable device. Examples of the electronic device 300 may include various electronic devices, such as computers such as a desktop, a laptop, and a tablet, TVs, set-top boxes, smartphones, cellular phones, game players, music players, video players, medical equipment, home appliances, etc. The electronic device 300 may also be referred to as a display device, a computing device, or a media device.

The messenger server 400 may represent a server that enables transmission and reception of text messages, voice messages, web pages, or content playback links among users registered with the messenger server 400 via a messenger system or a messenger application. The messenger server 400 may include a communication interface 410, a memory 420, and a processor 430. The messenger server 400 may be implemented with more components than those shown in FIG. 2, and is not limited to the above example.

The messenger server 400 may transmit a message received from the electronic device 300 to the messenger connection service server 200 for delivery to the display device 100, and receive a message to be transmitted from the display device 100 to the electronic device 300 from the messenger connection service server 200 and transmit the message to the electronic device 100.

The messenger connection service server 200 may serve to enable messenger connections between the display device 100 and the electronic device 300 using one or more messenger systems.

The messenger connection service server 200 may include a communication interface 210, a memory 220, and a processor 230.

The communication interface 210 enables the messenger connection service server 200 to communicate with the messenger server 400 and the display device 100.

The memory 220 may include a multi-messenger controller 221 and a messenger connection manager 222.

The processor 230 may use the messenger connection manager 222 stored in the memory 220 to configure a messenger connection relationship between the display device 100 and the electronic device 300.

In addition, the processor 230 may use the multi-messenger controller 221 stored in the memory 220 to distinguish and process different message formats used by a plurality of messenger servers in order to connect the display device 100 to the plurality of messenger servers using the different types of message formats.

According to an embodiment, the processor 230 may receive, from the electronic device, a request for connection to the display device via a messenger application, identify a type of the messenger application used to receive the connection request, perform authentication of the electronic device 300 and the display device 100, and when the authentication of the electronic device 300 and the display device 100 is completed, generate messenger connection information including messenger identification information indicating the identified type of messenger application, user identification information for identifying a user using the messenger application on the electronic device, and connected device identification information for identifying the display device, and perform, based on the generated messenger connection information, a messenger connection control between the electronic device and the display device.

According to an embodiment, to perform the authentication of the electronic device and the display device, the processor 230 may receive, from the electronic device, via the messenger application, an authentication number generated by the display device and output on a screen of the display device, receive, from the display device, the authentication number generated by the display device, and determine whether the authentication number output from the display device matches the authentication number received from the electronic device.

According to an embodiment, the processor 230 may receive a message to be delivered to the display device from the user for whom the messenger connection information is generated, process the received message based on messenger identification information corresponding to the message, and transmit the processed message to the display device.

The display device 100 is a device capable of displaying images or data according to a user's request, and may include a communication interface 110, a user interface 120, a display 130, a memory 140, and a processor 150.

The communication interface 110 may perform communication between the display device 100 and the messenger connection service server 200. The communication interface 110 may include one or more modules that enable wireless communication between the display device 100 and a wireless communication system or between the display device 100 and a network on which another electronic device is located. For example, the communication interface 110 may include a broadcast receiving module, a mobile communication module, a wireless Internet module, and a short-range communication module. The communication interface may be referred to as a transmitter/receiver.

The broadcast receiving module receives broadcast signals and/or broadcast-related information from an external broadcast management server via a broadcast channel. The broadcast signals may include a TV broadcast signal, a radio broadcast signal, and a data broadcast signal, as well as a broadcast signal that is a combination of the TV broadcast signal or radio broadcast signal with the data broadcast signal.

The mobile communication module transmits or receives wireless signals to or from at least one of a base station, an external terminal, and a server on a mobile communication network. The wireless signals may include a voice call signal, a video call signal, or various forms of data according to transmission and reception of text/multimedia messages.

The wireless Internet module refers to a module for wireless Internet access, and may be built into or external to a device. As wireless Internet technologies, wireless local area network (WLAN) (WiFi), wireless broadband (Wibro), World Interoperability for Microwave Access (Wimax), high speed downlink packet access (HSDPA), etc. may be used. The display device 100 may establish a Wi-Fi peer-to-peer (P2P) connection with another device via the wireless Internet module.

According to an embodiment, to perform authentication between the display device 100 and an external device 200, the wireless Internet module may perform a P2P connection with the external device.

The short-range communication module refers to a module for short-range communication. As short-range communication technologies, Bluetooth, radio frequency identification (RFID), Infrared Data Association (IrDA), ultra-wideband (UWB), ZigBee, etc. may be used.

The user interface 120 may be any form of interface capable of receiving a user input. For example, the user interface 120 may be arranged on a portion of the display device 100 and include a manipulation button capable of receiving a user input, a light receiver capable of receiving an input from a remote control device, a touch input when the display is implemented as a touch sensitive display, a microphone for receiving a voice uttered by the user, etc.

The display 130 may output images or data processed by the display device 100.

The memory 140 may store programs necessary for processing or control by the processor 150, and store data input to or output from the display device 100.

The memory 140 may include at least one type of storage medium among a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, and an optical disc.

The memory 140 may include a messenger connection manager 141 that manages a messenger connection, monitors and stores information about a user's behavior in a messenger connection mode to generate profile information.

The processor 150 controls all operations of the display device 100. For example, the processor 150 may execute one or more instructions stored in the memory 140 to perform functions of the display device 100 described in the present disclosure.

In an embodiment of the present disclosure, the processor 150 may execute one or more instructions stored in the memory 140 to control the above-described operations to be performed. In this case, the memory 140 may store one or more instructions executable by the processor 150.

Also, in an embodiment of the present disclosure, the processor 150 may store one or more instructions in an internal memory provided therein and execute the one or more instructions stored in the internal memory to control the above-described operations to be performed. In other words, the processor 150 may execute at least one instruction or program stored in the internal memory provided in the processor 150 or the memory 140 to perform specified operations.

According to an embodiment, the memory 140 may store programs necessary for processing or control by the processor 150, and store data input to or output from the display device 100. Furthermore, the memory 140 may store pieces of data necessary for operations of the display device 100.

Also, programs stored in the memory 140 may be categorized into a plurality of modules according to their functions.

The processor 150 performs functions of controlling all the operations of the display device 100 and a flow of signals between the internal components of the display device 100 and processing data. When there is an input by the user or preset and stored conditions are satisfied, the processor 150 may execute an operating system (OS) and various applications stored in the memory 140.

In addition, the processor 150 may include an internal memory. In this case, at least one of data, programs, or instructions stored in the memory 140 may be stored in the internal memory of the processor 150.

According to an embodiment, the processor 150 may receive a message transmitted via a messenger system, identify messenger connection information corresponding to a user who transmitted the message and a type of a messenger application used for the message, obtain stored profile information corresponding to the identified messenger connection information, and respond to a message from the electronic device or control an operation of the display device based on the obtained profile information.

According to an embodiment, the processor 150 may collect, based on the messenger connection information, information about a user's behavior performed on the display device or environment information regarding the display device, and generate the collected information about the user's behavior or environment information as the profile information corresponding to the messenger connection information.

According to an embodiment, the processor 150 may obtain content information or advertisement information recommended based on the profile information corresponding to the messenger connection information regarding the user, and transmit a message guiding the recommended content information or advertisement information to the electronic device via the messenger application.

According to an embodiment, the processor 150 may switch between a family mode indicating a state in which the display device is not messenger connected and a messenger connection mode indicating a state in which the display device is messenger connected to the user.

According to an embodiment, the processor 150 may switch to a messenger connection mode corresponding to the user, in response to reception of the message from the user in the family mode in which the display device is not messenger connected or a state in which the display device is messenger connected to another user. For such switching, according to an embodiment, the processor 150 may obtain messenger connection information regarding the user who transmitted the message, and control an operation of the display device based on profile information corresponding to the messenger connection information regarding the user.

According to an embodiment, the processor 150 may control the display device to automatically execute an application included in the profile information according to the profile information corresponding to the messenger connection information regarding the user.

According to an embodiment, in order to control the display device, the processor 150 perform an operation of controlling an environment of the display device based on environment settings information included in the profile information or perform automatic login to the application according to account login information included in the profile information.

According to an embodiment, the processor 150 may switch to the family mode based on the messenger connection being released while the display device is operating in the messenger connection mode, and control the display device to change the environment of the display device based on default profile information corresponding to the family mode.

According to an embodiment, in response to reception of a request to power off the display device while the display is operating in the messenger connection mode, the processor 150 may control the display device to maintain the messenger connection mode for a predetermined time and switch to the family mode after a lapse of the predetermined time.

According to an embodiment, in response to reception of a content sharing request message from the user during playback of content in the messenger connection mode, the processor 150 may control generation of a chatting room including metadata containing information about the played content, share the metadata about the generated chatting room on a counterpart display device of a counterpart user with whom to share the content, and according to the sharing operation, display a multi-view including a content play window and a chat window corresponding to the chatting room.

According to an embodiment, the processor 150 may control a key used to access the chatting room to be provided to a counterpart electronic device of the counterpart user with whom to share the content, receive, from the counterpart display device connected to the counterpart electronic device, a request to access the chatting room using the key, and according to authentication of the key in response to the request to access the chatting room, transmit the metadata about the chatting room to the counterpart display device. The metadata about the chatting room may include information about the content to be shared and address information for accessing the chatting room.

In addition, the block diagram of the display device 100 is provided for illustration of an embodiment. Each of the components in the block diagram may be integrated, added, or omitted according to the specification of the display device 100 that is actually implemented. For example, two or more components may be combined into a single component, or a single component may be split into two or more components when necessary. Functions performed in each block are intended to describe embodiments, and a specific operation or device related to the functions does not limit the scope of the present disclosure.

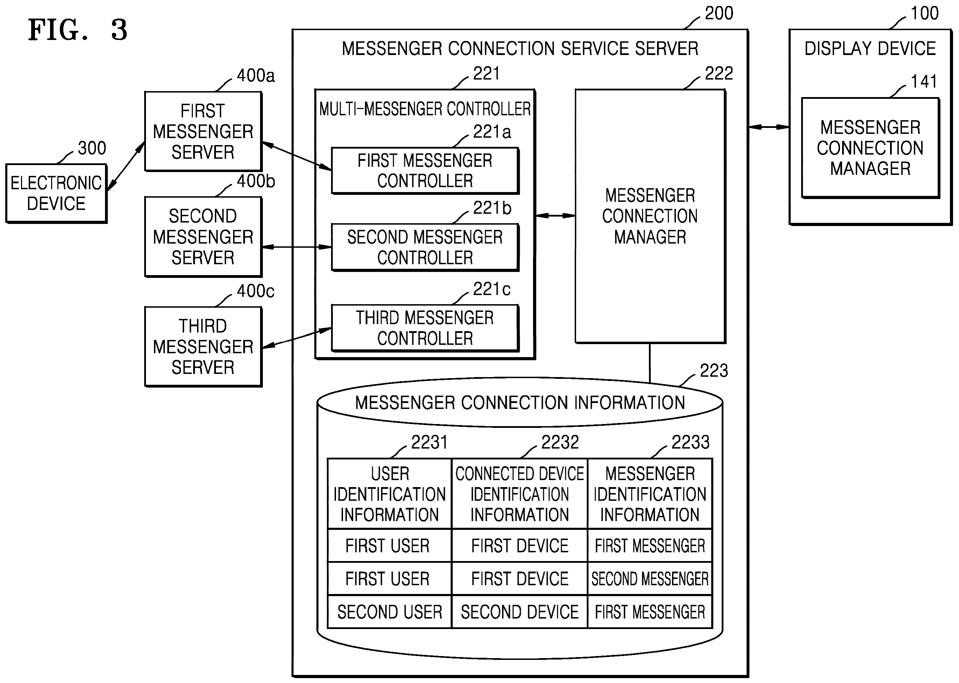

FIG. 3 is a detailed block diagram illustrating functions of a messenger connection service server according to an embodiment.

Referring to FIG. 3, a messenger connection service server 200 may include a multi-messenger controller 221, a messenger connection manager 222, and messenger connection information 223.

The multi-messenger controller 221 may separately process messages received from a plurality of messenger systems of different types in order to connect the different types of messenger systems to a display device 100.

Because social messenger systems each transmit messages via its unique message format and message transmission path, the multi-messenger controller 221 may include a plurality of messenger controllers using a message format and a message transmission path used by each social messenger system.

According to an embodiment, the multi-messenger controller 221 may include a first messenger controller 221a, a second messenger controller 221b, and a third messenger controller 221c. The first messenger controller 221a is designated to correspond to a first messenger server 400a to process a message format for the first messenger system used by a first messenger server 400a and transmit and receive messages via a message transmission path used by the first messenger server 400a. The second messenger controller 221b is designated to correspond to a second messenger server 400b to process a message format for a second messenger system used by the second messenger server 400b and transmit and receive messages via a message transmission path used by the second messenger server 400b. The third messenger controller 221c is designated to correspond to a third messenger server 400c to process a message format for a third messenger system used by the third messenger server 400c and transmit and receive messages via a message transmission path used by the first messenger server 400c. For example, when receiving a message from the second messenger server 400b, the second messenger controller 221b may process the received message and transmit it to the display device 100, and a message to be transmitted from the display device 100 to an electronic device 300 may be processed by the second messenger controller 221b and transmitted to the second messenger server 400b. Each messenger controller may store a message reception address (Uniform Resource Locator (URL)) of a corresponding messenger server, and transmit and receive messages to and from the corresponding messenger server by using the message reception address. The message reception address may be in a form that can be transmitted via Internet communication (http, https, web socket, etc.).

The messenger connection manager 222 configures a messenger connection relationship between the electronic device 300 and the display device 100. For example, when the user of the electronic device 300 requests addition of a friend representing the display device 100 registered with the first messenger system, e.g., "Samsung TV Guide", as a friend, the messenger connection manager 222 may perform a specified operation for authenticating the electronic device 300 and the display device 100. When the messenger connection manager 222 performs a specified authentication procedure and the authentication is successfully completed, the messenger connection manager 222 may configure a messenger connection relationship between the electronic device 300 and the display device 100 via the first messenger system. The messenger connection manager 222 may not configure a messenger connection relationship when authentication is not successful.

The messenger connection manager 222 may store messenger connection information 223 including a messenger connection relationship between one or more electronic devices and one or more display devices. Also, the messenger connection manager 222 may transmit the generated messenger connection information 223 to the display device 100.

The messenger connection information 223 may include user identification information 2231, connected device identification information 2232, and messenger identification information 2233.

The user identification information 2231 is information for identifying a user connected to a device via a messenger connection, and for example, in the case of a social messenger application based on account login, the user identification information 2231 may be information that may represent a specific user, such as a value representing a specific user's account.

The connected device identification information 2232 is information for identifying a device connected to a user via a messenger connection, and may be, for example, address information of a device on a network or unique identification information indicating the device. For example, when there are a plurality of connected devices in a household, the connected device identification information 2232 may use information for distinguishing between the plurality of connected devices in the household. For example, when both a master room TV and a living room TV are used for a messenger connection in a household, the connected device identification information 2232 may distinguish between the master room TV and the living room TV.

The messenger identification information 2233 may indicate information for identifying a messenger used to connect a user and a device. To enable connection via various commercialized messenger systems, the messenger identification information 2233 may distinguish between a plurality of different messenger types.

Referring to an exemplary configuration of the messenger connection information 223 shown in FIG. 3, a connection relationship is registered so that a first user may connect to a first device via both a first messenger a second messenger. In addition, a connection relationship is registered so that a second user may connect to the second device via the first messenger.

According to an embodiment, the messenger connection manager 222 may transmit the generated messenger connection information to the display device 100 in order to share the messenger connection information with the display device 100.

According to an embodiment, when a new messenger system needs to be registered, the messenger connection service server 200 may add a new messenger controller corresponding to the new messenger system and connect the new messenger system to the new messenger controller, thereby facilitating expansion of the service.

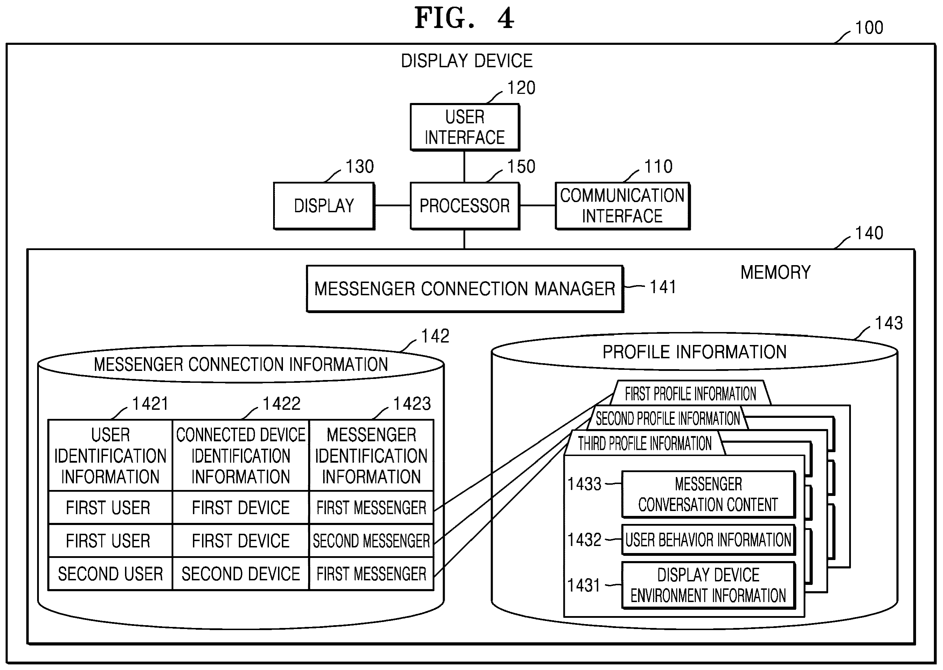

FIG. 4 is a detailed block diagram illustrating a function of configuring a messenger connection-based user environment of the display device 100, according to an embodiment.

Referring to FIG. 4, the memory 140 of the display device 100 may include a messenger connection manager 141, messenger connection information 142, and profile information 143.

The messenger connection manager 141 may receive the messenger connection information 142 from the messenger connection service server 200 and store it in the memory 140. The messenger connection service server 200 may generate and store the messenger connection information 223 for connecting a plurality of electronic devices to a plurality of display devices. Also, the messenger connection manager 141 may receive from the messenger connection service server 200 and store the messenger connection information 142 related to the display device 100 itself.

The messenger connection manager 141 may collect behavior of a messenger connected user or an environment and store it as profile information 143 in order to provide a customized environment or information tailored to the messenger connected user.

Specifically, the messenger connection manager 141 may generate profile information corresponding to each user for each of one or more messenger connection relationship entries included in the messenger connection information 142. For example, the messenger connection manager 141 may configure first profile information for a first messenger connection relationship entry corresponding to a first user, a first device (i.e., the display device 100), and a first messenger, second profile information for a second messenger connection relationship entry corresponding to a second user, the first device, and a second messenger, and third profile information for a third messenger connection relationship entry corresponding to a second user, the first device, and the first messenger.

According to an embodiment, the messenger connection manager 141 may include display device environment information 1431, user behavior information 1432, and messenger conversation message content 1433 in the profile information 143.

According to an embodiment, the messenger connection manager 141 may include the display device environment information 1431 in the profile information 143. The display device environment information 1431 may include information obtained by a user messenger connected to the display device setting an environment of the display device while the display device 100 is messenger connected to the user. For example, while messenger connected to the display device using the first messenger, the first user may set an environment of the display device, for example, various environment variables of the display device, such as screen brightness, colors, sound, etc. The messenger connection manager 141 may thus store the display device environment information 1431, which is set by the first user while the first user is messenger connected using the first messenger, as profile information corresponding to the messenger connection relationship entry including the first user and the first messenger. In this way, when the messenger connection manager 141 stores the display device environment information as profile information, the messenger connection manager 141 may control, when the first user later makes a messenger connection using the first messenger, the environment of the display device 100 by using the display device environment information included in the profile information stored for the first user. For example, when the first user sets a screen brightness of the display device to A and the volume to B while messenger connected to the display device using the first messenger, the display device 100 may control the screen brightness of the display device 100 to be A and the volume to be B when the first user later connects to the display device 100 via the first messenger.

According to an embodiment, the messenger connection manager 141 may include the user behavior information 1432 in the profile information 143. The user behavior information 1432 may include, while the display device 100 is messenger connected to a user, information input by the messenger connected user to manipulate the display device, resultant information obtained due to the manipulation operation, etc. For example, the user behavior information 1432 may include information about an application executed by the user, information about an account logged in to execute the application, information about content that the user searches for, selects, or plays in the application, etc. By storing the application account login information entered by the user in a messenger connected state, when the user later attempts to execute the application while in the messenger connected state, the messenger connection manager 141 may automatically perform an application login operation by using the stored login information without asking for the account login information again. In addition, by accumulating information about content that the user has searched for or played, the messenger connection manager 141 may later recommend content or advertisements that may be appropriate for or preferred by the user while the user is in a messenger connected state. Alternatively, the messenger connection manager 141 may use the accumulated information to transmit a message to the user with personalized content or advertisements via a messenger system. Also, the messenger connection manager 141 may access a third party service provider to accumulate data in addition to information obtainable from the display device 100 itself in order to accumulate video consumption information related to streaming service content played on the display device 100.

Furthermore, the user behavior information 1432 may include information for configuring a home screen of the display device 100, which is set by the user. Also, the user behavior information 1432 may include not only login account information for an application executed by the user on the display device 100 but also login account information for a native application that performs home screen settings and the like for the display device 100. In this way, by storing the login account information for the native application as profile information, the messenger connection manager 141 may collectively change a display viewing environment by using the login account information for the native application when the corresponding user is messenger connected again later.

According to an embodiment, the messenger connection manager 141 may include the messenger conversation content 1433 in the profile information 143. The messenger conversation contents 1433 may include message contents transmitted and received between a user and the display device 100 while the user is messenger connected to the display device. These messenger conversation contents 1433 may be referred to when the messenger connection manager 141 analyzes what topics the user is interested in and the like.

According to an embodiment, the messenger connection manager 141 may further include voice command interpreter settings information in the profile information 143. The voice command interpreter settings information may include, when a voice message is received from a user while the display device is messenger connected to the user, information indicating a voice command interpreter used to interpret the received voice message.

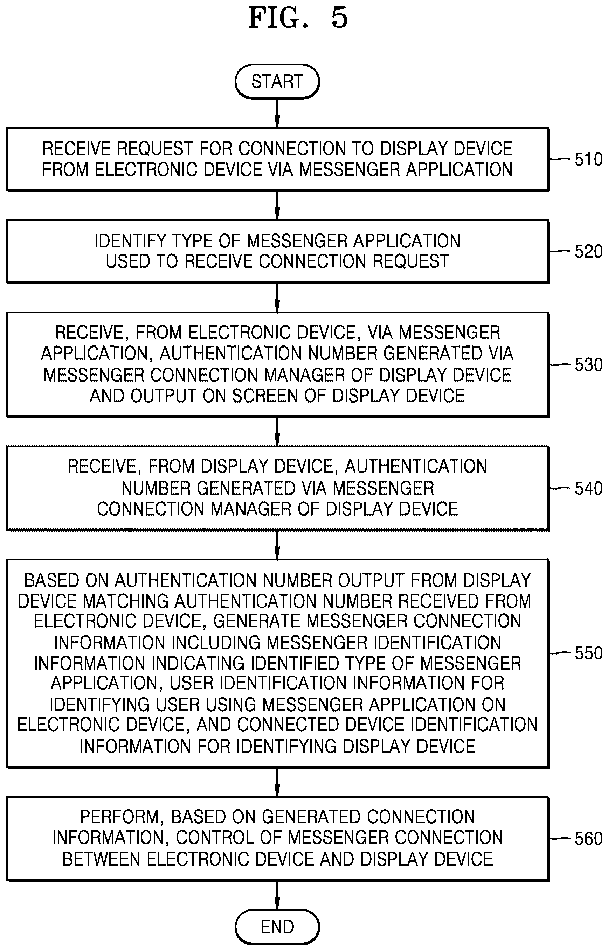

FIG. 5 is a flowchart illustrating an example of a process of a method, performed by a messenger connection service server, of generating connection information indicating a connection relationship between an electronic device and a display device, according to an embodiment.

Referring to FIG. 5, in operation 510, the messenger connection service server may receive a request for a messenger connection to the display device from the electronic device via a messenger application.

In operation 520, the messenger connection service server may identify a type of the messenger application used to receive the messenger connection request.

In operation 530, the messenger connection service server may receive, from the electronic device, via the messenger application, an authentication number generated via a messenger connection manager of the display device and output on a screen of the display device.

In operation 540, the messenger connection service server may receive, from the display device, an authentication number generated via the messenger connection manager of the display device.

In operation 550, based on the authentication number output from the display device matching an authentication number received from the electronic device, the messenger connection service server may generate messenger connection information including messenger identification information indicating the identified type of messenger application, user identification information for identifying a user using the messenger application on the electronic device, and device identification information for identifying the display device.

In operation 560, the messenger connection service server may perform, based on the generated messenger connection information, a messenger conversation control between the electronic device and the display device.

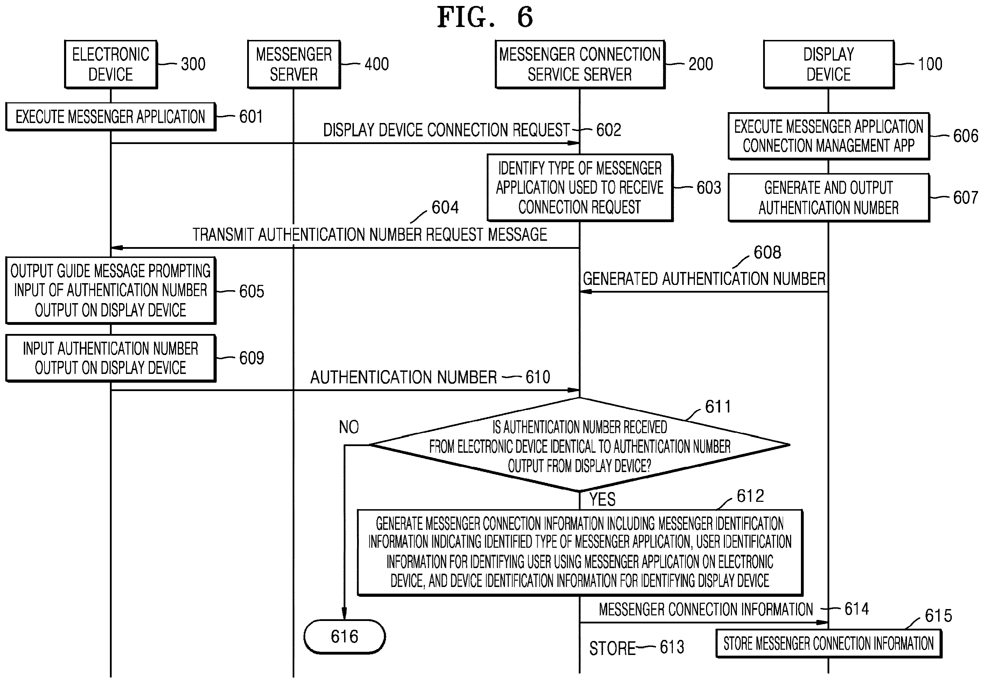

FIG. 6 is a flowchart illustrating a specific example of a process of a method, performed by a messenger connection service server, of generating messenger connection information indicating a connection relationship between an electronic device and a display device, according to an embodiment.

Referring to FIG. 6, in operation 601, the electronic device 300 may execute a messenger application. For example, a user of the electronic device 300 may execute one desired application from among one or more messenger applications installed on the electronic device 300.

In operation 602, the electronic device 300 may transmit a display device connection request to the messenger connection service server 200 via the executed messenger application, i.e., via the messenger server 400. The messenger server 400 may include the display device 100 among counterpart entities to which the electronic device 300 is connectable, and the user of the electronic device 300 may request a connection to the display device by selecting the display device 100 from among the connectable counterpart entities.

In operation 603, when receiving the display device connection request, the messenger connection service server 200 may identify a type of messenger application used for the connection request. Because the messenger connection service server 200 includes a multi-messenger controller system to respond to requests from one or more different messenger systems, when there is a request from a specified messenger system by using the multi-messenger controller system, the messenger connection service server 200 may identify which messenger system has transmitted the request.

In operation 604, the messenger connection service server 200 may transmit an authentication number request message to the electronic device 300 via the messenger server 400.

In operation 605, the electronic device 300 may output a guide message prompting input of an authentication number output on the display device.

Moreover, a user who desires to connect the electronic device 300 to the display device 100 by using the messenger system may also perform, on the display device 100, manipulations for connecting the electronic device 300 to the display device 100.

In operation 606, the display device 100 may execute a messenger application connection management application. For example, the user of the electronic device 100 may execute the messenger application connection management application installed on the display device 100 and select a type of a messenger used for connection between the electronic device 300 and the display device 100.

In operation 607, in response to receiving a selection of a type of a messenger used for connection between the electronic device 300 and the display device 100, the display device 100 may generate an authentication number corresponding to the selected type of messenger and output the authentication number onto a display of the display device 100.

In operation 608, the display device 100 may transmit the authentication number generated in this way to the messenger connection service server 200. According to an example, the display device 100 may transmit, to the messenger connection service server 200, information about the type of messenger selected by the user, as well as the generated authentication number.

In operation 609, the electronic device 300 may receive an input of the authentication number output on the display device. In other words, the user of the electronic device 300 may input the authentication number output on a screen of the display device 100 to which the user desires to connect, according to the guide message prompting input of the displayed authentication number in operation 605.

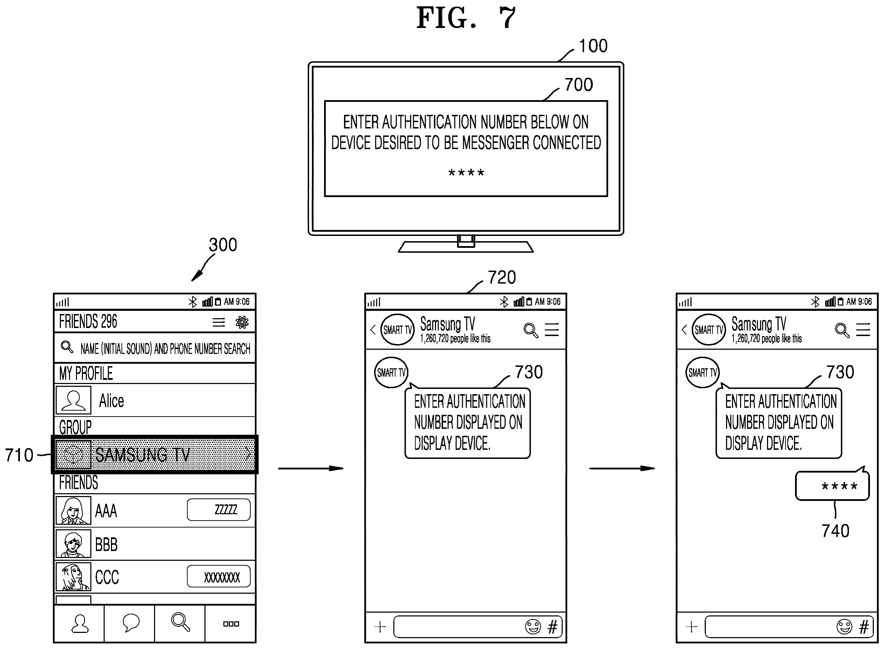

FIG. 7 illustrates an example of a user interface on an electronic device 300 requesting a connection by selecting a Samsung TV on the electronic device 300 as an example of a display device, according to an embodiment.

Referring to FIG. 7, a user may execute, for example, a first messenger application among one or more messenger applications installed on the electronic device 300, and search for a display device, e.g., a Samsung TV, registered with a first messenger system via a friend search function in the first messenger application. When the user adds the Samsung TV as a friend through a name search, etc., a message transfer window for conversing with the Samsung TV may be displayed on the electronic device 300. A guide message 730 from the Samsung TV, prompting input of an authentication number, may be displayed in the message transfer window 720. The guide message 730 may be in the form of, for example, "Please enter an authentication number displayed on the display device". The user who desires to connect the electronic device 300 to the display device via a first messenger that is a specific messenger application may execute a messenger connection manager installed on the display device 100 desired to be connected, and select the first messenger as the messenger application to be connected with the display device 100. Upon the user's selection, the display device 100 may generate an authentication number, e.g., a personal information number (PIN) code, used for authentication for messenger connection with the electronic device 300, and output a message 700 informing the user of authentication number "****". The user may check the authentication number displayed on the display device 100, and input the authentication number "****" 740 displayed on the display device 100 to the first messenger of the electronic device 300.

In operation 610, the electronic device 300 may transmit the authentication number input by the user to the messenger connection service server 200 via the messenger server 400.

In operation 611, by determining whether the authentication number input to the electronic device 300 is identical to the authentication number received from the display device 100, the messenger connection service server 200 may check whether the electronic device 300 is the entity requesting the messenger connection and whether the display device 100 is the target device to which the electronic device 300 desires to connect. When the authentication number received from the electronic device 300 is not identical to the authentication number received from the display device 100, the messenger connection service server 200 may determine that the authentication has failed and perform operation 616 to reconfirm authentication again. For example, because the authentication has failed, the messenger connection service server 200 may transmit, to the electronic device 300, a message prompting the user to re-enter an authentication number. When an authentication number received from the electronic device 300 is identical to the authentication number received from the display device 100, the messenger connection service server 200 may perform operation 612.

In operation 612, the messenger connection service server 200 may determine that the electronic device 300 and the display device 100 to be connected are authenticated, and generate messenger connection information for messenger connection between the electronic device 300 and the display device 100. According to an embodiment, the messenger connection service server 200 may generate connection information to include user identification information for identifying a user using a messenger application on the electronic device, device identification information for identifying the display device used for a messenger connection, and messenger identification information indicating the identified type of messenger application.

The messenger connection information 223 representing the messenger connection between the electronic device and the display device may include the user identification information 2231, the device identification information 2232, and the messenger identification information 2233, as shown in FIG. 3.

The user identification information 2231 may indicate information for identifying a user using the electronic device in the messenger connection. For example, a messenger application using account logins may provide information that can represent a specific user, such as a non-overlapping hash value representing an account, and this hash value may be used as a value for identifying the user. For example, a value, such as a user ID, generated by a social messenger system to represent a channel, page, or friend (a value generated using non-overlapping numbers or letters or a combination of both) may be used for user identification information to identify the user.

The device identification information 2232 may indicate information for identifying a display device to be connected to the electronic device in the messenger connection. When receiving the authentication number from the display device, the messenger connection service server 200 may obtain identification information about the display device transmitting the authentication number as well as the authentication number, and generate device identification information 820 based on the identification information about the display device obtained in this way. The device identification information 820 may include a non-overlapping hash value.

The messenger identification information 2233 may indicate information for identifying a messenger used for a messenger connection between the electronic device and the display device. Because one or more messenger connections may be possible between a specific electronic device and a specific display device, messenger identification information may be required to determine a message path, i.e., which messenger should be used to transmit a message. For example, because there are commercialized messenger systems such as KakaoTalk Messenger, Facebook Messenger, and Line Messenger, messenger identification information 830 is information for identifying which of these commercialized messenger systems is used for a messenger connection between the electronic device and the display device.

In operation 613, the messenger connection service server 200 may store the generated messenger connection information in the memory.

In operation 614, the messenger connection service server 200 may transmit the generated messenger connection information to the display device 100.

In operation 615, when receiving the messenger connection information from the messenger connection service server 200, the display device 100 may store the messenger connection information.

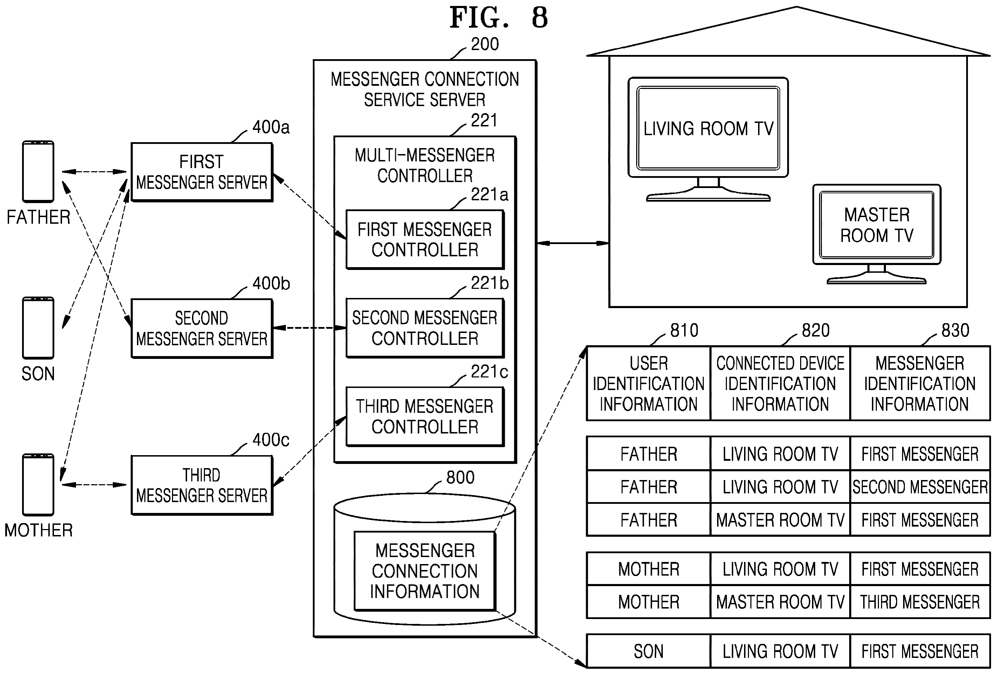

FIG. 8 illustrates an example in which connection information for a messenger connection is generated for each of a plurality of users in a household, according to an embodiment.

Referring to FIG. 8, a father who is a family member may request a connection between the father's smartphone and a living room TV using a first messenger system operated by a first messenger server 400a. The messenger connection service server 200 may include a first messenger controller capable of processing message transmission and reception with a first messenger system, and the messenger connection service server 200 may generate messenger connection information for connecting the father to the living room TV via the first messenger system. Also, the father may request a connection between the father's smartphone and the living room TV using a second messenger system operated by a second messenger server 400b, and accordingly, the messenger connection service server 200 may generate messenger connection information for connecting the father to the living room TV via a second messenger. In addition, the father may request a connection between the father's smartphone and a master room TV using the first messenger system operated by the first messenger server 400a, and accordingly, the messenger connection service server 200 may generate messenger connection information for connecting the father to the master room TV via a first messenger.

In this way, the messenger connection service server 200 may also generate connection information for a son and a mother to create messenger connection information as shown in FIG. 8.

Referring to FIG. 8, messenger connection information 800 according to an example includes three entries representing connection information about the father, two entries representing connection information about the mother, and one entry representing connection information about the son. For example, an entry indicating connection to the living room TV via the first messenger, an entry indicating connection to the living room TV via the second messenger, and an entry indicating connection to the master room TV via the first messenger are created for the father, an entry indicating connection to the living room TV via the first messenger and an entry indicating connection to the master room TV via the third messenger are created for the mother, and an entry indicating connection to the living room TV via the first messenger is created for the son. In this way, when there are a plurality of TVs in a house, each TV may be managed with a separate messenger friend name, and a messenger connection may be created for each TV.

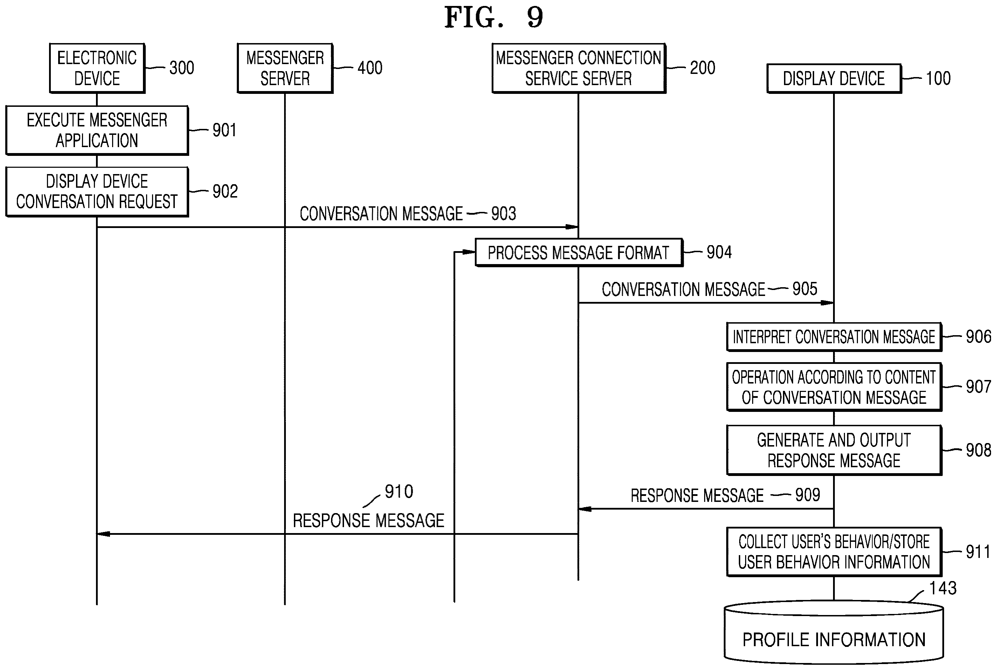

FIG. 9 is an example of a flowchart for describing a process of a method of collecting information about a user's behavior after establishing a messenger connection between an electronic device and a display device, according to an embodiment.

Referring to FIG. 9, in operation 901, the electronic device 300 may execute a messenger application.

In operation 902, a user's display device conversation request may be received via the messenger application executed by the electronic device 300.

In operation 903, a conversation message in response to the display device conversation request from electronic device 300 may be transmitted to the messenger connection service server 200 via the messenger server 400.

In operation 904, the messenger connection service server 200 may receive the conversation message from the user of the electronic device 300 via the messenger server 400, and process a message format used by a type of a messenger, i.e., a corresponding messenger system, used by the messenger server 400 that transmitted the conversation message. For example, a multi-messenger controller of the messenger connection service server 200 may process the message according to a received message format.

In operation 905, the messenger connection service server 200 may transmit the conversation message in the processed message format to the display device 100.

In operation 906, when receiving the conversation message, the display device 100 may interpret the received conversation message.

In operation 907, the display device 100 may perform an operation according to interpretation of content of the conversation message. For example, when the content of the conversation message is <Turn up the volume>, the display device 100 may perform an operation of increasing a volume of a speaker of the display device based on interpretation of the content of the conversation message. For example, when the content of the conversation message is <Launch YouTube>, the display device 100 may perform an operation of executing the YouTube application.

In operation 908, the display device 100 may selectively generate a response message corresponding to the conversation message when necessary. When the conversation message is in the form of a message requesting a response, or when it is difficult to perform an operation corresponding to the content of the conversation message because supplementary explanation needs to be provided, the display device 100 may generate a response message in response to the conversation content. For example, when the content of the conversation message is, e.g., <Recommend a program to watch on Friday>, the display device 100 may generate a response message including information about one or more recommended programs in order to respond thereto.

In operation 909, the display device 100 may transmit the generated response message to the messenger connection service server 200.

In operation 910, the messenger connection service server 200 may transmit the response message to the electronic device 300 via the messenger server 400 by using a messenger system used for messenger conversation. The multi-messenger controller of the messenger connection service server 200 may process the response message according to a used messenger format and transmit the processed response message to the electronic device 300 via the messenger server 400.

In operation 911, the display device 100 may collect information about a user's behavior performed on the display device 100 while in the messenger connected state and store the collected user behavior information. The display device 100 may store profile information including user behavior information in association with messenger connection information.

The user behavior information collected by the display device 100 in the messenger connected state may be any information obtained by the user manipulating the display device 100 after the user and the display device 100 establish a messenger connection therebetween. For example, the user behavior information may include information about content watched by the user, user profile information set on a content providing service server such as Netflix^{®} or YouTube^{®}, login connection information for a TV application user logged in based on an account, information about a user's search for a display device, environment settings information obtained by the user setting an environment of the display device, etc. The information about the content watched by the user may include identification information about the content watched by the user, genre information regarding the content watched by the user, category information regarding the content watched by the user, viewing time information regarding the content watched by the user, etc. The user profile information set on the content providing service such as Netflix or YouTube may include login information including a user ID and a password for accessing each content providing service, content providing service subscription information, or the like. The environment settings information obtained by the user setting the environment of the display device is information obtained by the user setting the environment of his or her display device, and may include, for example, information about screen brightness, volume, user interface layout, etc. In addition, the user behavior information may include messages transmitted and received using a connected messenger system.

According to an embodiment, the display device 100 may collectively change the environment of the display device 100 to a personalized environment by using such user behavior information when the user switches to a messenger connection mode.

According to an embodiment, the display device 100 may receive, from a streaming server or a third party server, relevant content that may be provided to each user on Netflix or YouTube, by using such user behavior information.

When a content recommendation service is provided for each streaming service, content recommendation information is transmitted to the display device 100, and the personalized information is all different for each user profile in each streaming service. Because the display device 100 has each user profile information in messenger connection information, it may selectively transmit content information to each of users already connected to the display device.

According to an embodiment, the display device 100 may analyze a user's preferences by using such user behavior information, and actively recommend content or an advertisement suitable for the analyzed user's preferences to the user. For example, the display device 100 may transmit a message containing recommended content or advertisement content to the user via a messenger system based on the connection information.

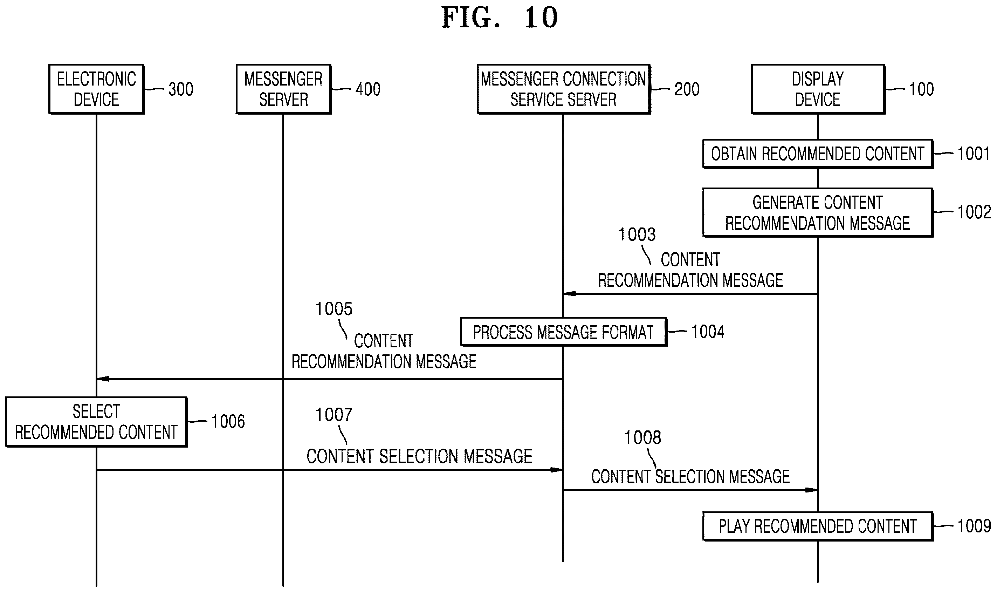

FIG. 10 is an example of a flowchart for describing a process of a method, performed by a display device, of actively transmitting a recommendation message to a user, according to an embodiment.

Referring to FIG. 10, in operation 1001, the display device 100 may obtain recommended content. The display device 100 may discover recommended content suitable for a user while monitoring content based on messenger connection information stored in the display device. According to an embodiment, the display device 100 may receive recommended content from a third party server connected to the display device 100. For example, servers such as Netflix or YouTube may recommend content based on user profiles, and the display device may obtain recommended content from the servers such as Netflix or YouTube. According to an embodiment, the display device 100 may obtain recommended content through streaming-based video content information that may be provided by the display device 100 itself.

In operation 1002, the display device 100 may generate a content recommendation message recommending the obtained recommended content.

In operation 1003, the display device 100 may transmit the generated content recommendation message to the messenger connection service server 200.

In operation 1004, when receiving the content recommendation message, the messenger connection service server 200 may refer to connection information about the user receiving the content recommendation message to check corresponding messenger identification information and process a format of the content recommendation message so that the content recommendation message may be transmitted using a messenger system identified by the messenger identification information.

In operation 1005, the messenger connection service server 200 may transmit the content recommendation message to the electronic device 300 via the messenger server 400.

In operation 1006, the electronic device 100 may select the recommended content from the received content recommendation message. The content recommendation message includes execution link information that enables playback of content on the display device, so that when the user selects the execution link information, the display device may display a screen for viewing the content.

In operation 1007, the electronic device 100 may transmit a content selection message to the messenger connection service server 200 via the messenger server 400.

In operation 1008, the messenger connection service server 200 may transmit the content selection message to the display device 100.

In operation 1009, when receiving the content selection message, the display device 100 may parse the received content selection message and control the selected recommended content to be played accordingly.

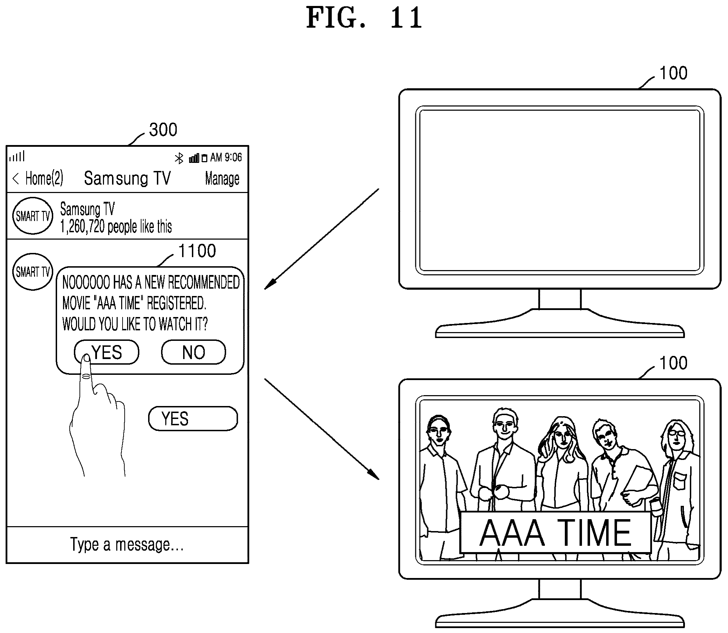

FIG. 11 is a diagram for explaining an example of a content recommendation message that may be provided by a display device, according to an embodiment.

Referring to FIG. 11, the display device 100 may obtain recommended content that may be appropriate for user A based on profile information collected for the user A. For example, when it is determined that user A views or likes a thriller genre a lot among contents provided by N content service server, the N content service server may provide new content in the thriller genre as recommended content for the user A when the new content is added on the display device 100. When obtaining content that may be recommended to the user A in this manner, the display device 100 may generate and transmit a message recommending the recommended content to the user A. For example, as shown in FIG. 11, the display device 100 may transmit, to the user A, a content recommendation message 1100, such as <Noooooo has a new recommended movie "AAA Time" registered. Would you like to watch it?>, by using a messenger registered in the user A's messenger connection information. In this way, the user may receive content recommendation information that may be provided by the display device by using a messenger system he/she usually uses on his/her smartphone.

Because <YES> included in the content recommendation message is connected to a content execution link, when the user selects <YES> included in the content recommendation message, the display device 100 may control the corresponding recommended content to be immediately played according to the content execution link connected to <YES>.

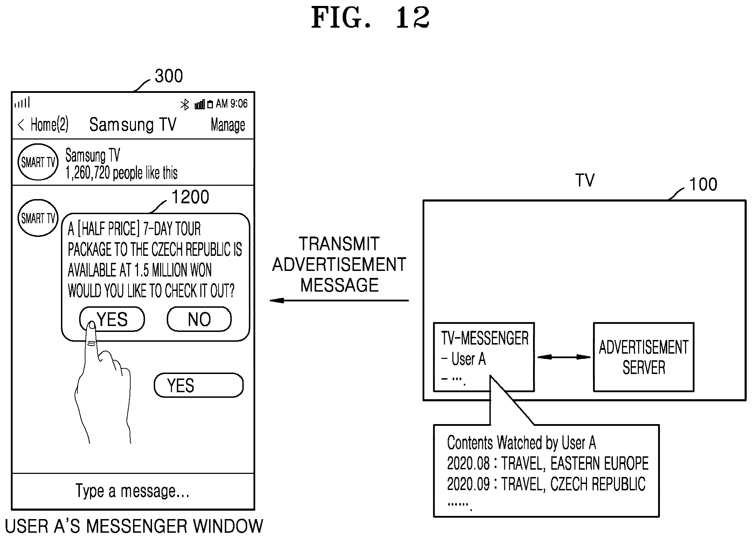

FIG. 12 is a diagram for explaining another example of a content recommendation message that may be provided by a display device, according to an embodiment.

According to an embodiment, the display device 100 may provide a customized advertisement by analyzing viewing information collected in a messenger connection mode. For example, when user A has been watching a lot of travel content lately, the display device 100 may determine that the user A is much interested in travel. For example, when the user A watched content related to traveling to Eastern Europe in December 2020 and content related to traveling to the Czech Republic in January 2021, the display device 100 may determine that the user A is much interested in traveling to the Czech Republic or Eastern Europe. Therefore, the display device 100 may provide a message about a travel product that may be recommended to the user A, based on content provided from an advertisement server. For example, the display device 100 may transmit, to the user A, an advertisement message 1200 <A [half price] 7-day tour package to the Czech Republic is available at 1.5 million won. Would you like to check it out?> by using a user A's connected messenger system. Because <YES> in the advertisement message transmitted to the user may be linked to an execution screen of the corresponding advertising content, when the user selects <YES> in the advertisement message, the display device may provide the execution screen of the advertising content linked to <YES>. In this way, the user may conveniently receive advertisement information that may be provided by the display device by using a messenger system he or she usually uses on his/her smart phone.

According to an embodiment, the display device may operate in two distinct status modes, a family (default) mode and a messenger connection mode.

The family (default) mode may indicate a state in which the display device is not connected to a messenger and thus not provide a personalized service. In general, the display device may use network connections and user accounts to install various applications and log in to an account for each application to receive services associated with a corresponding application. When the display device is being used as a shared family device for family members to watch together, the display device may always remain logged in to the same account unless it is logged out of the account for an application. For this reason, parental locks are set to prevent children from watching adult content channels, or a password and the like are used to prevent a channel or application from running. However, this method may lead to inconvenience of adults having to separately enter a password for watching.

The messenger connection mode may indicate a state in which the display device is connected to an electronic device such as a smart device by using a messenger system. For a user whose messenger connection information is registered, because the user may be identified based on the messenger connection information and profile information about the user may be registered in association with the messenger connection information, the display device may personalize the display device itself or provide customized services to the user by using the messenger connection mode.

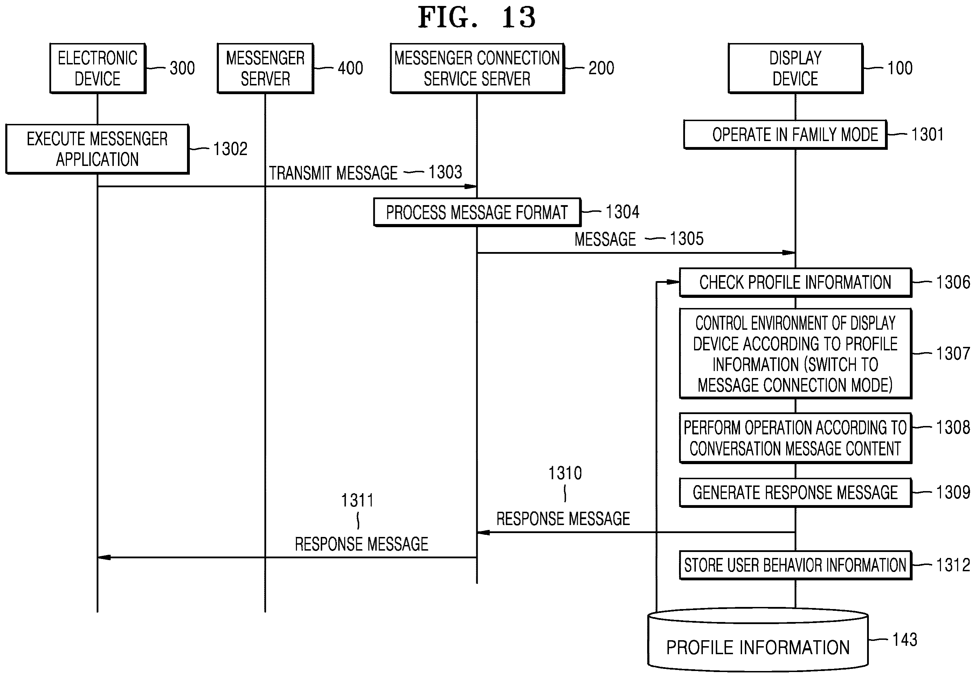

FIG. 13 is an example of a process of a method of switching to a messenger connection mode during operation in a family mode, according to an embodiment.

Referring to FIG. 13, in operation 1301, the display device 100 may operate in a family mode. In the family mode, one or more users may view the display device 100 in common.

While the display device 100 is operating in the family mode, the electronic device 300 may execute a messenger application in operation 1302, and transmit a message by using the executed messenger application in operation 1303.

The messenger connection service server 200 may process a format of the received message in operation 1304, and transmit the processed message to the display device 100 in operation 1305.

In operation 1306, when receiving the message, the display device 100 may check profile information corresponding to messenger connection information regarding the user who transmitted the message.

In operation 1307, the display device 100 may switch its mode to a messenger connection mode according to the obtained profile information. Specifically, the display device may control a display device environment based on content included in the obtained profile information. Controlling the environment of the display device according to the profile information may mean changing or controlling any of the items that can control the environment of the display device according to details of the profile information. For example, the display device 100 may control a volume of the display device or a brightness or color of a display screen, based on volume information, brightness information, or color information included in the profile information. For example, the display device 100 may configure a home screen according to home screen configuration information included in profile information. For example, the display device 100 may obtain its own Internet connection account information from the profile information. For example, the display device 100 may configure a voice command interpreter according to the profile information. For example, the display device 100 may obtain profile information for a Netflix^{®} account or login information for a YouTube^{®} account based on the profile information.

In operation 1308, the display device 100 may perform an operation according to the content of the message. For example, when the content of the message is related to control of the environment of the display device, the display device 100 may control its environment accordingly. For example, when the content of the message is to change a TV channel on the display device or increase the volume, the display device 100 may perform an operation according to such a control command.

In operation 1309, the display device 100 may generate a response message. The response message is optional, and it may not be necessary to generate a response message depending on the status of the message transmitted from the user. For example, when the message from the user requires a response or additional explanation, the display device 100 may generate the response message.

In operation 1310, the display device 100 may transmit the response message to the messenger connection service server 200, and in operation 1311, the messenger connection service server 200 may convert the received response message into a message format used by a messenger system corresponding to the messenger connection information, and transmit the resulting response message to the electronic device 300 via the messenger server 400.

In operation 1312, the display device 100 may store, as profile information about the user, user behavior information including the content of the message received from the user or information about content related to the operation according to the content of the message. For example, while in a messenger connected state, the user may log in to YouTube, which is an application installed on the display device, with his or her account and view content on the YouTube. As a login method, when the user uses a messenger application on the electronic device to enter login information in a messenger's menu window, the display device may store the entered YouTube login information as profile information about the corresponding user. Also, for example, even when the user logs in to YouTube by using a remote control that controls the display device in a messenger connected state, the display device may store the login information as profile information about the user corresponding to a current messenger connection mode. Also, a connection state may be maintained until the connection state is terminated or the messenger connection mode is changed to another user.

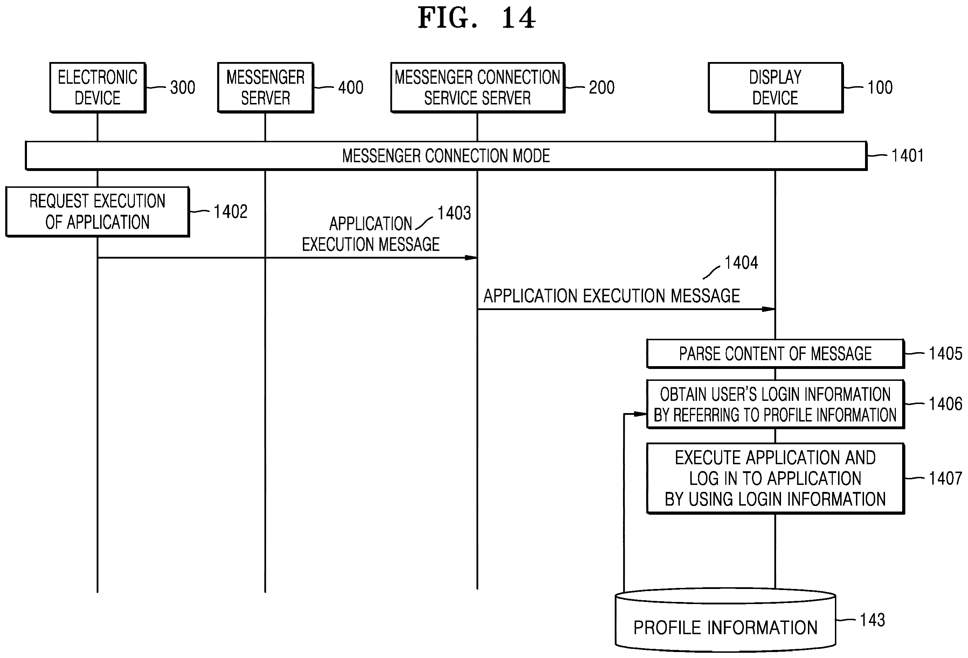

FIG. 14 is a diagram illustrating an example of a process of logging in to an application by referring to profile information about a user in a messenger connection mode, according to an embodiment.

Referring to FIG. 14, in operation 1401, the display device 100 may operate in a messenger connection mode with the electronic device 300. Operating in the messenger connection mode with the electronic device 300 may refer to a state in which the electronic device 300 and the display device 100 are connected using a messenger system used by a user of the electronic device 300, and a state in which the display device 100 controls the environment of the display device 100 and performs operations according to profile information corresponding to registered messenger connection information.

In operation 1402, the electronic device 300 may request execution of an application on the display device while in the messenger connection mode. For example, the user of the electronic device 300 may input a message requesting execution of a specific application by using a messenger system. For example, the user may input a message such as <Launch YouTube>.

In operation 1403, the electronic device 300 may transmit the input application execution message to the messenger connection service server 200 via the messenger server 400.

In operation 1404, the messenger connection service server 200 may transmit the received application execution message to the display device 100.

In operation 1405, the display device 100 may receive the application execution message and parse the content of the received application execution message to determine that login information is required to execute the corresponding application.

In operation 1406, the display device 100 may obtain login information for the user to execute the corresponding application by referring to the profile information 143 about the corresponding user.

In operation 1407, the display device 100 may execute the application and perform a login operation by using the obtained login information.

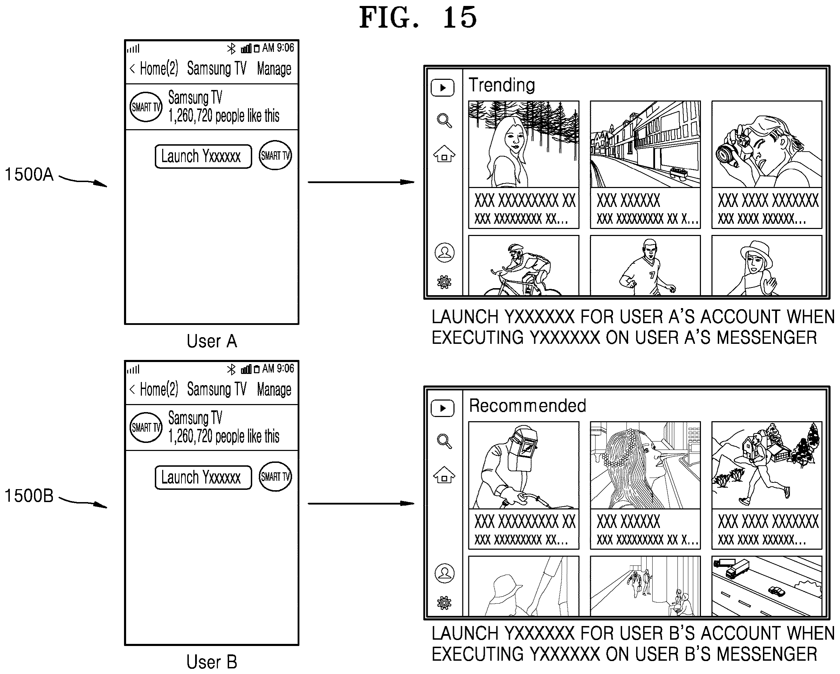

FIG. 15 is a reference diagram for describing an example of executing an application by using login information for each user, according to an embodiment.

Referring to 1500A of FIG. 15, when the display device 100 receives a Yxxxxxx application execution message from user A while operating in a messenger connection mode corresponding to the user A, the display device 100 may obtain Yxxxxxx application account information from stored profile information corresponding to the user A and execute YouTube application by using the Yxxxxxx application account information corresponding to the user A.

Referring to 1500B of FIG. 15, when the display device 100 receives a Yxxxxxx application execution message from user B while operating in a messenger connection mode corresponding to the user B, the display device 100 may obtain Yxxxxxx application account information from stored profile information corresponding to the user B and execute the YouTube application by using the Yxxxxxx application account information corresponding to the user B.

By connecting the display device to a user's messenger in advance, the user may easily execute an application using his or her account information by simply transmitting an application execution message via the messenger registered in messenger connection information without having to enter separate login or account information.

According to an embodiment, the display device may change a user who is messenger connected thereto while operating in a messenger connection mode. For example, the display device may operate in the messenger connection mode corresponding to the user A and then change to the messenger connection mode corresponding to the user B by using an explicit or implicit method.

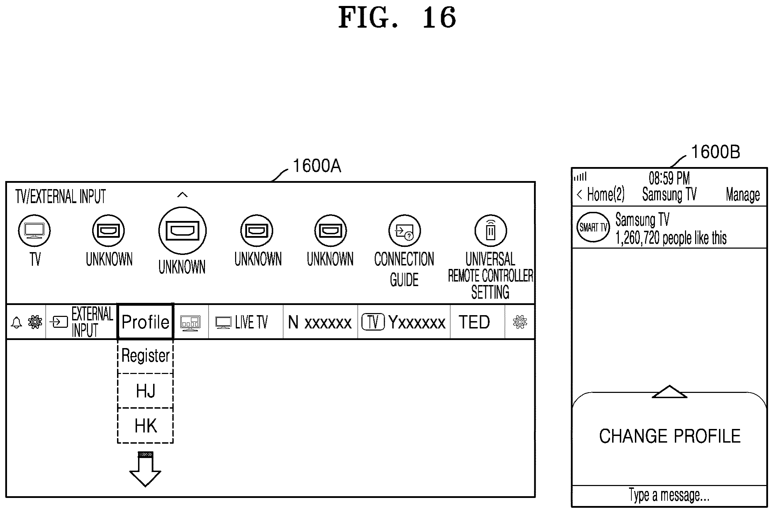

FIG. 16 is a reference diagram for describing an example in which a display device explicitly changes a messenger connected user during operation in a messenger connection mode corresponding to the messenger connected user, according to embodiments.

Referring to 1600A of FIG. 16, the display device 100 may provide a user interface for changing a messenger connected user. In a Profile menu, a <Register> tab for newly registering a user and names of messenger connected users registered on the display device 100 may be displayed. The user may change a messenger connected user by selecting a name of a messenger connected user included in the Profile menu. For example, when the display device 100 selects a messenger connected user <HK> during operation in a messenger connection mode currently corresponding to a messenger connected user <HJ>, then the display device 100 may change the messenger connection mode of the display device 100 from user <HJ> to user <HK>.

Referring to 1600B of FIG. 16, when the user requests a profile change via an electronic device by using a profile change menu additionally provided by a messenger system, the display device 100 may change the messenger connection mode of the display device to a user corresponding to the profile change request.

Implicitly changing a messenger connected user in a messenger connection mode of the display device refers to an operation in which the display device is operating in a messenger connection mode corresponding to an existing user and upon reception of a connection request from another user, changes to a messenger connection mode corresponding to the other user. For example, when the display device 100 receives a message from user B via a messenger system while operating in a messenger connection mode corresponding to user A, the display device 100 may change the messenger connection mode from the user A to the user B. That is, the display device 100 may change profile information referred to by the display device 100 from user A's profile information to user B's profile information. Accordingly, the display device 100 may change and control a display device environment, which has been controlled according to the user A's profile information, according to the user B's profile information.

According to embodiments, the display device 100 may release the messenger connection mode of the display device 100 and switch to the family mode according to a user's logout request. The user's logout request may be received by receiving a logout request message through a messenger window on the electronic device, by using a specific key on a remote control for the display device, or through a logout function provided via a user interface provided by the display device. Alternatively, when the display device is powered off, the display device may immediately switch to the family mode, which is a default state, o switch to the family mode after a lapse of a time set for the display device. The family mode indicates a default setting state of a display device to which a messenger is not connected. For example, when the display device is used as a shared device in a home and there are children, user settings such as a parental lock (an adult content protection function) may be usually set up on the display device. When a state in which the parental lock is set up on the display device in this way is set to a default family mode, in a message connection mode corresponding to a specific user, the parental lock is released and the display device operates according to an environment set by the specific user, but when the messenger connection mode corresponding to the specific user is released and the family mode is applied again, the parental lock settings may be restored.

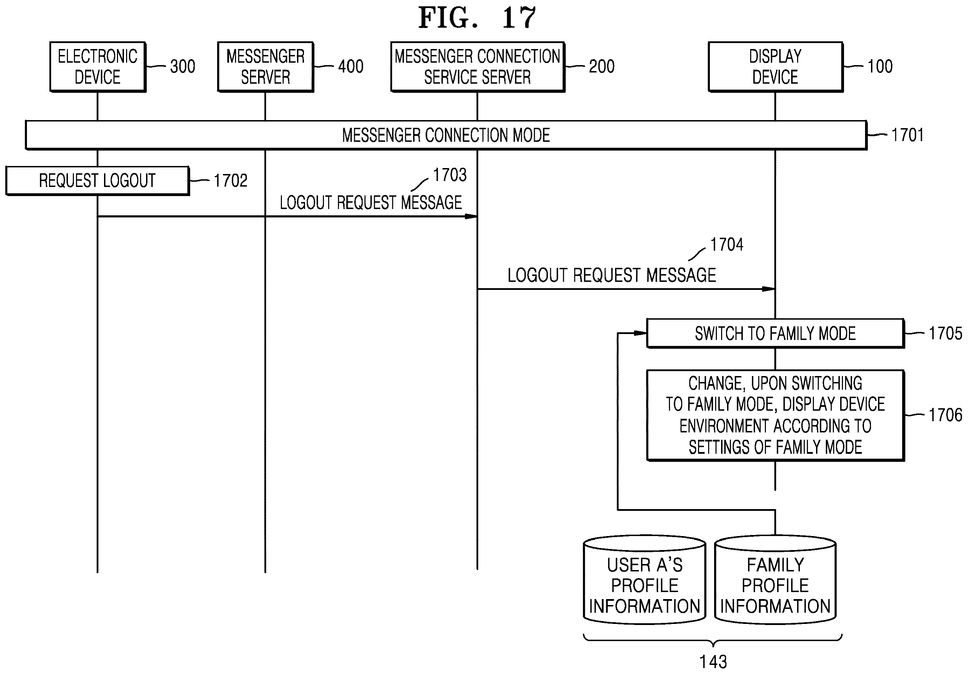

FIG. 17 is a flowchart illustrating an example of a process of switching from a messenger connection mode to a family mode, according to an embodiment.

Referring to FIG. 17, in operation 1701, the display device 100 may operate in a messenger connection mode corresponding to user A using the electronic device 300. According to user A's profile information, a parental lock on the display device 100 may be released in the messenger connection mode corresponding to the user A.

While the display device 100 is operating in the messenger connection mode corresponding to the user A in this way, in operation 1702, the user A of the electronic device 300 may request logout by using a messenger system.

In operation 1703, the electronic device 300 may transmit a logout request message to the messenger connection service server 200 via the messenger server.

In operation 1704, the messenger connection service server 200 may transmit the received logout request message to the display device 100.

In operation 1705, the display device 100 may interpret the received logout request message to release the messenger connection mode corresponding to the user A from its current state and switch to a family mode.

In operation 1706, the display device 100 may change, upon the switching to the family mode, a display device environment according to family mode settings. In the messenger connection mode corresponding to the user A, the display device 100 controls an environment of the display device 100 and recommends content by referring to the user A's profile information, whereas in the family mode, the display device 100 may control the environment of the display device 100 or recommend content according to family profile information instead of referring to the user A's profile information. For example, the parental lock is released in the messenger connection mode corresponding to the user A, but the parental lock may be restored to the default state in the family mode. For example, because YouTube login information is stored in the user A's profile information, in the messenger connection mode corresponding to the user A, the user may launch YouTube by simply transmitting a message requesting launch of YouTube without the need for separate YouTube login information. However, when separate registered YouTube login information is not stored in the family mode, users may need to enter login information to launch YouTube in the family mode.

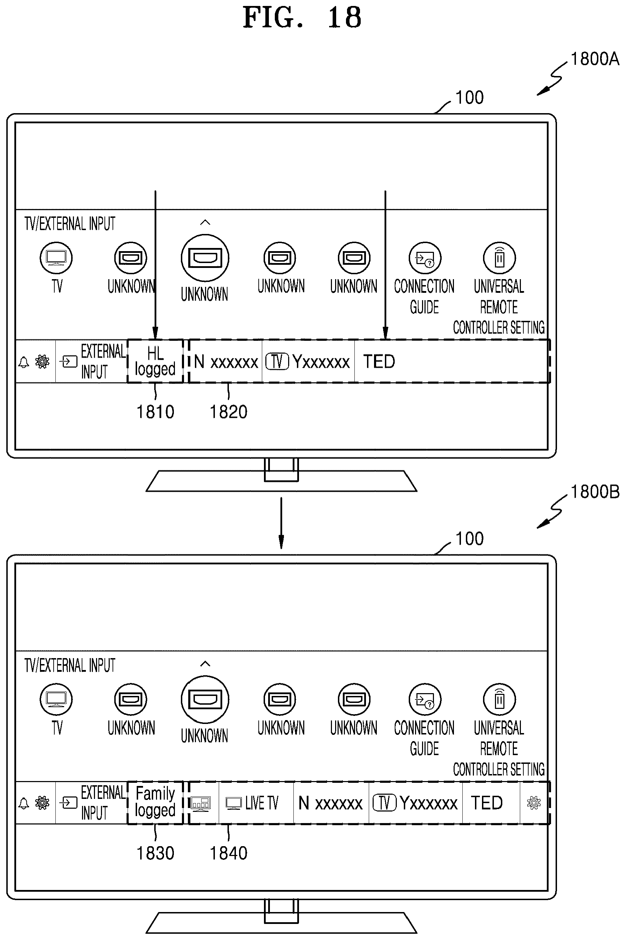

FIG. 18 is a reference diagram for describing an example in which a configuration of a home screen of a display device changes when the display device switches from a messenger connection mode to a family mode, according to an embodiment.

1800A of FIG. 18 shows a state in which a user has changed the order or configuration of applications displayed on a home screen of the display device to suit the user in a messenger connection mode of the display device. On the home screen, the display device 100 displays an item 1810 <HL Logged> to indicate that the display device 100 is currently in the messenger connection mode, and also shows menus 1820 including Nxxxxxx, Yxxxxxx, and TED arranged in the order of applications preferred by the user.

When switching from the messenger connection mode as shown in 1800A to the family mode, the display device 100 may restore and display the configuration of the home screen to its default state without referring to user's profile information any longer, as shown in 1800B. Referring to 1800B, the display device 100 displays an item 1830 <Family Logged> on the home screen to indicate the family mode, and also displays application items 1840 in the order of application items that are set by default on the display device 100, e.g., live TV, Nxxxxxx, Yxxxxxx, and TED.

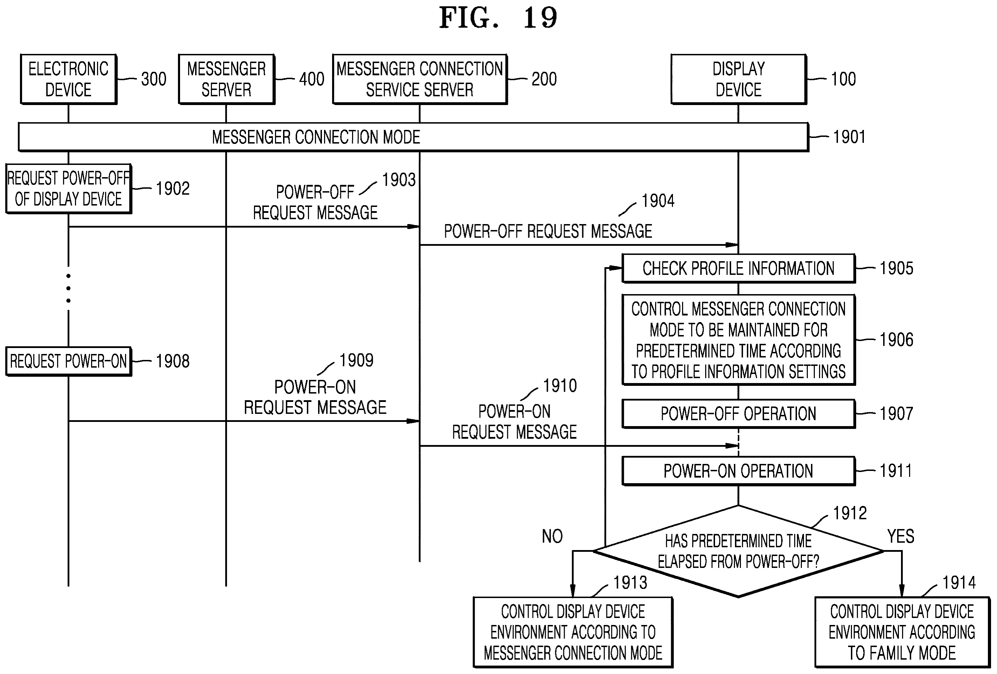

FIG. 19 is a flowchart illustrating an example of a process of switching to a family mode when a display device is powered off, according to an embodiment.

Referring to FIG. 19, in operation 1901, the display device 100 may operate in a messenger connection mode corresponding to user A using the electronic device 300. In the messenger connection mode corresponding to the user A, according to user A's profile information, the display device 100 may be in a state of controlling a display device environment, configuring its home screen, and recommending content.

In operation 1902, the user of the electronic device 300 may request power-off of the display device by using a corresponding messenger system.

In operation 1903, the electronic device 300 may transmit a power-off request message to the messenger connection service server 200 via the messenger system.

In operation 1904, the messenger connection service server 200 may transmit the received power-off request message to the display device 100.

In operation 1905, the display device 100 may receive the power-off request message and check user A's profile information. This is to check whether setting information for maintaining the messenger connection mode for a specified time when the display device is powered off is stored in the user A's profile information.

In operation 1906, the display device 100 may control the display device to maintain the messenger connection mode for a predetermined time from power-off according to profile information settings. For example, when the profile information includes settings for immediately switching to the family mode when the display device is powered off, the display device 100 may immediately perform a power-off operation without a separate control operation. However, the profile information may include settings for, instead of switching to the family mode immediately when the display device is powered off, maintaining the messenger connection mode for a predetermined time and switching to the family mode after the predetermined time has elapsed. For example, the setting information may indicate that the display device 100 is logged out of the messenger connection mode when 1 hour has elapsed from power-off. This is because switching to the family mode after a specified time may be convenient for the user, considering a case where the user wants to use the display device in the messenger connection mode, power it off, and then use the display device in the messenger connection mode again immediately after the power-off.

In this way, the display device 100 may control an operation of a counter for counting the time elapsed since power-off of the display device with regard to the profile information. By controlling the operation of the counter and checking information about the time counted by the counter, the display device may determine how much time has elapsed since the power-off when there is a command to power on the display device again after the power-off of the display device.

In operation 1907, the display device 100 may perform a power-off operation. For example, by performing the power-off operation, the display device 100 may maintain a suspend to RAM state in which settings information may be retained while the screen of the display device is turned off but the power is not completely cut off, and when powered back on, the display device 100 may retain message connection information regarding a last user before the power-off.

In operation 1908, the user of the electronic device 300 may request power-on of the display device.

In operation 1909, the electronic device 300 may transmit a power-on request message to the messenger connection service server 200, and in operation 1910, the messenger connection service server 200 may transmit the power-on request message to the display device 100.

In operation 1911, when receiving a power-on request message, the display device 100 may perform a power-on operation.

In operation 1912, the display device 100 may check the counter set in operation 1906 to determine whether the predetermined time has elapsed from the power-off.

In operation 1913, when the predetermined time has not elapsed from the power-off, the display device 100 may control a display device environment according to the messenger connection mode.

In operation 1914, when the predetermined time has elapsed from the power-off, the display device 100 may control the display device environment according to the family mode.

While the example of FIG. 19 illustrates a case where a display device power-off request or a display device power-on request is received using the messenger system for the electronic device 300, embodiments are not necessarily limited thereto. It should be understood that the same process may also be applied even when the display device power-off request or display device power-on request is received via a remote controller controlling the display device 100.

According to an embodiment, the display device 100 may also receive and process a voice message transmitted via a messenger system. When a voice command is transmitted via the messenger system, the display device may receive the voice command via the service server, and the display device 100 may store, in in messenger connection information or profile information about the user, information about a voice interpreter used to interpret a voice in the received voice message.

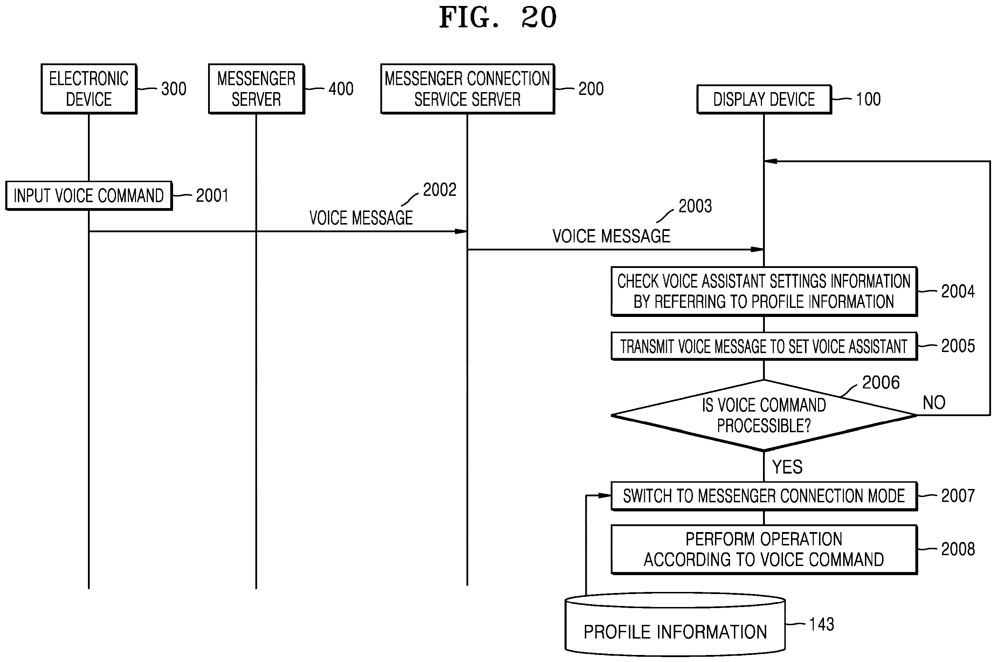

FIG. 20 is a flowchart illustrating a process of a processing method when a display device receives a voice message via a messenger system, according to an embodiment.

Referring to FIG. 20, in operation 2001, the user of the electronic device 300 may input a voice command by using a messenger system for the electronic device 300.

In operation 2002, the electronic device 300 may transmit a voice message including the voice command input by the user to the messenger connection service server 200 via the messenger server 400.

In operation 2003, the messenger connection service server 200 may transmit the received voice message to the display device 100.

In operation 2004, the display device 100 may identify a user who has transmitted the voice message and check whether voice recognizer settings information is registered by referring to profile information corresponding to the identified user. When one or more voice recognizers may be available in the display device 100, the profile information about the user may include settings information about a voice recognizer to be used. For example, there are various voice recognizers such as Bixby, Alexa, and Google Assistant, and the voice recognizers may be built into the display device or connected to the display device 100 in an external form, and recognize a voice command from the user to perform an operation corresponding to the recognized voice command.

In operation 2005, when the voice recognizer settings information is registered, the display device 100 may transmit a voice message to the set voice recognizer. For example, when <Bixby> is set as a voice recognizer in profile information corresponding to user A, the display device 100 may transmit a voice message to Bixby to cause Bixby to interpret the voice message.

In operation 2006, the display device 100 may determine whether the voice command included in the received voice message is processible, and end the operation when it is not processible.

In operation 2007, when the voice command included in the received voice message is processible, the display device 100 may switch to the messenger connection mode by referring to the profile information corresponding to the user. That is, the display device 100 may control the display device environment by referring to the profile information corresponding to the user.

In operation 2008, the display device 100 may perform an operation corresponding to the voice command included in the voice message. For example, when the voice command included in the voice message is <MTV channel>, the display device 100 may perform an operation of moving to the MTV channel.

While the example of FIG. 20 includes operation 2007 of switching to the messenger connection mode corresponding to the user who transmitted the voice message, operation 2007 may be omitted when the display device was already operating in the messenger connection mode corresponding to the user before the user inputs the voice command.

According to an embodiment, users in different spaces may watch a broadcast together by using a messenger connection mode, and also a multi-view that simultaneously displays content and a message conversation window on the screen of the display device may be implemented through message transmission. For example, when a user is watching TV and desires to share information about a program he or she is currently watching with a friend, the user may transmit a message <Watch Together> in a messenger window, and in this case, the TV may obtain information about the program currently being watched, and user A may share the program information with a messenger friend user B by using a message sharing function of the messenger. When the user B performs a Watch Together via the received message, a screen of the display device of the two users may be split, and a chat window may be displayed on the split screen. Thereafter, you can have a one-on-one (1:1) conversation about the program being watched together via the messenger window on the TV screen.

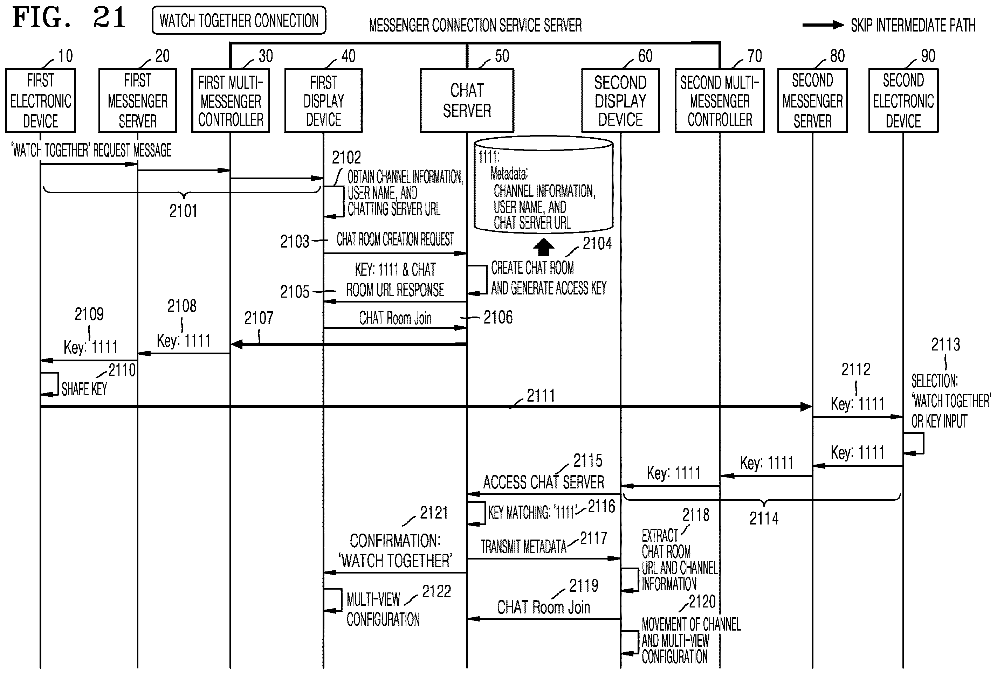

FIG. 21 is a flowchart illustrating an example of a process of a method for allowing one user to watch content together with another user by using a messenger connection system, according to an embodiment.

Referring to FIG. 21, a first electronic device 10 and a first display device 40 may be devices used by a first user, and a first messenger server 20 may be a server for operating a first messenger system used by the first user via the first electronic device 10. A second electronic device 90 and a second display device 60 may be devices used by a second user, and a second messenger server 80 may be a server for operating a second messenger system used by the second user via the second electronic device 90. The first messenger server 20 and the second messenger server 80 may be the same messenger server or different messenger servers. The messenger connection service server may include a first multi-messenger controller 30, a chatting server 50, and a second multi-messenger controller 70. As the first multi-messenger controller 30 is for processing a message format used by the first messenger system and the second multi-messenger controller 70 is for processing a message format used by the second messenger system, the first multi-messenger controller 30 may be the same as the second multi-messenger controller 70 when the first messenger system is the same as the second messenger system.

In operation 2101, while the first display device 40 is playing content in a messenger connection mode with the first electronic device 10, the first electronic device 10 may transmit a sharing request message to the first display device 40 via the first messenger server 20 and the first multi-messenger controller 30 according to a <watch together> request from the first user. The sharing request message may be a text message including text <Watch together> input by the first user, or a voice message including <Watch together> uttered by the first user.

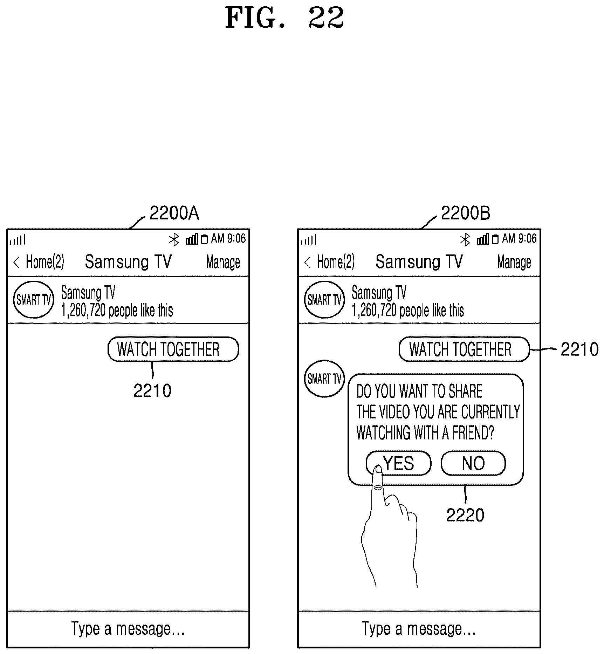

FIG. 22 illustrates examples of user interfaces on a first electronic device during a process in which a first user makes a sharing request for sharing content played on a first display device with a second user, according to an embodiment.

Referring to 2200A of FIG. 22, while connected to the first display device 40 using the first messenger system, the first user may transmit a sharing request message to the first display device 40 by entering text 2210 <Watch together> via the first electronic device 10 of the first user. In response to the sharing request message, the first electronic device 10 may display a message 2220 received from the first display device 40, as shown in 2200B of FIG. 22. The message received from the first display device 40 and displayed on the first electronic device 10 may include a confirmation of the content to be shared, such as <Do you want to share the video you are currently watching with a friend?>. Then, in response to the message 2220, the first user may select <YES>.

In operation 2102, when receiving the watch together request message, the first display device 40 may obtain, according to the watch together request from the first user, information about content currently being played by the first display device 40, the name of the first user, and a chatting server URL for accessing the chatting server.

In operation 2103, the first display device 40 may access the chatting server 50 by using the chatting server URL and transmit a chatting room generation request message to the chatting server 50. A message for requesting access to a chatting room may include the information about the content and the first user name.

In operation 2104, when receiving the chatting room generation request message, the chatting server 50 may generate a chatting room according to a chatting room generation request, and generate an access key for accessing the generated chatting room, for example, "1111 ". The chatting server 50 may also generate metadata about the generated chatting room, including the information about the content being played on the first display device 40, the first user name, and a chatting room URL that is an address for accessing the generated chatting room.

According to an embodiment, the metadata about the generated chatting room may further include time information about the playback progress of the content being played on the first display device 40 and a key expiration time based on the time information about the playback progress. When the second display device 60 receives the metadata and then plays the content to be watched together with the first display device 40, the time information about the playback progress of the content being played may be used to determine a playback timing of the content to be watched together. The playback timing may not be necessary when the content to be watched together is live broadcast content, but when the content to be watched together is content received from a content providing service server, information about the playback time of the content may be used to time the playback of the content watched by the first user with the playback of the content watched by the second user. In addition, the key expiration time included in the metadata may represent a validity period of the watch together request message. For example, when the second user who has received the watch together request message approves the watch together request after the first user has already finished watching the content or after the live broadcast content has ended, playback of the entire content will have ended, making such approval from the second user meaningless. Therefore, such key expiration time information may be used to prevent multi-view conversion when the second user selects to watch together after the key expiration time.

In operation 2105, the first display device 40 may transmit, to the first display device 40, a response message including the generated chatting room URL and access key.

In operation 2106, the first display device 40 may join a chatting room generated by the chatting server 50 by using the received chatting room URL and access key.

In operation 2107, the chatting server 50 may transmit the access key for accessing the generated chatting room to the first multi-messenger controller 30, in operation 2108, the first multi-messenger controller 30 may transmit the received access key to the first messenger server 20, and in operation 2109, the first messenger server 20 may transmit the received access key to the first electronic device 10.

In operation 2110, the first electronic device 10 may perform an operation of sharing the chatting room access key with another user, e.g., the second user. The operation of sharing the access key may include, for example, identifying the second user with whom to share the access key, and receiving a user input for confirming the sharing of the access key with the identified second user.

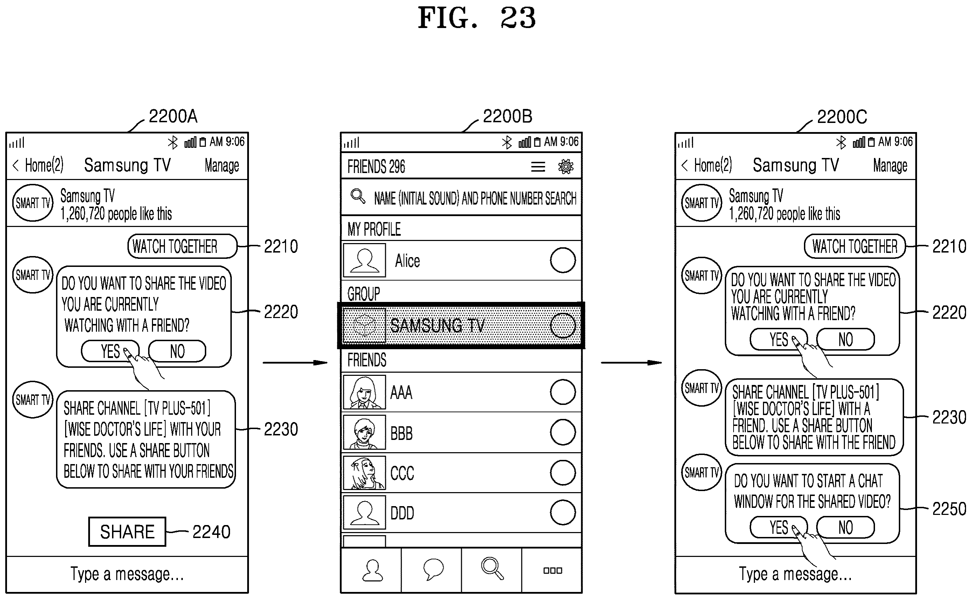

FIG. 23 illustrates examples of user interfaces on a first electronic device during a process in which a first user makes a sharing request for sharing content being played on a first display device with a second user, according to an embodiment.

For example, referring to FIG. 23, the first electronic device 10 may output a message 2230 <Share Channel [TV Plus-501][Wise Doctor's Life] with a friend. Use a share button below to share with the friend>. When the first user selects the <Share> button 2240 in response to the message 2230, the first electronic device 10 may output a user interface as shown in 2300B, so that the first user may select a counterpart friend with whom to share content. The first user may select, via the user interface shown in 2300B, a friend with whom to share content played on the first display device, and according to a selection of the friend, the first electronic device 10 may identify a second user as a friend to share the content with.

In operation 2111, the first electronic device 10 may transmit the access key to the second messenger server 80 to which the second user to share the content with is connected.

In operation 2112, the second messenger server 80 may transmit the access key to the second electronic device 90.

In operation 2113, the second device 90 may perform an operation of confirming the watch together request. For example, the second device 90 may display a message informing that the watch together request has arrived from the first user and receive, from the second user, an input for approving the watch together request. Alternatively, the second device 90 may display the access key from the first user and also provide a user interface requiring input of the access key as an approval of the watch together request, and receive an access key input from the second user.

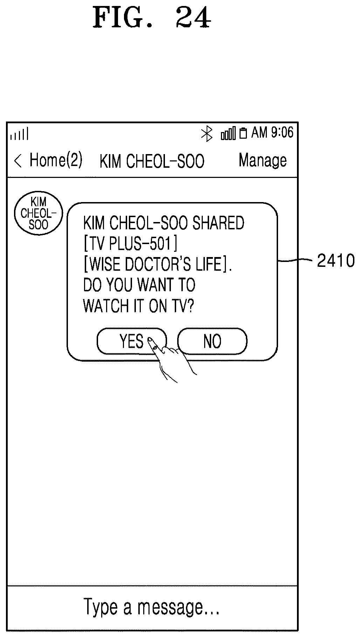

FIG. 24 illustrates examples of user interfaces displayed on a second user's electronic device in response to a sharing request made by a first user to share content played on a first display device with a second user, according to an embodiment.

For example, referring to FIG. 24, the second electronic device 90 may output a message 2410 <Kim Cheol-soo shared [TV Plus-501][Wise Doctor's Life]. Do you want to watch it on TV?>, and when the second user selects <YES> in response to the message 2410, the second electronic device 90 may determine that the second user has approved the content watch together request from the first user.

In operation 2114, the second device 90 may transmit the access key to the second display device 60 via the second messenger server 80 and the second multi-messenger controller 70, according to the second user's approval for the watch together request.

In operation 2115, the second display device 60 that has received the chatting room access key may access the chatting server 50 by using the access key.

In operation 2116, the chatting server 50 may search for a chatting room that matches the access key received from the second display device 60.

In operation 2117, the chatting server 50 may transmit, to the second display device 60, metadata about the chatting room matching the access key as a search result.

In operation 2118, the second display device 60 may extract a chatting room URL and content information from the metadata received from the chatting server 50.

In operation 2119, the second display device 60 may join the chatting room by using the extracted chatting room URL.

In operation 2120, the second display device 60 may control the corresponding content to be played based on the content information extracted from the metadata. For example, when the content currently being played on the second display device 60 is first broadcast content and the content information extracted from the metadata indicates the second broadcast content, the second display device 60 may change the channel from a first broadcasting content channel to a second broadcasting content channel. When the content information extracted from the metadata indicates third content provided by a third party service provider, the second display device 60 may play the third content by executing an application supported by the third party service provider and requesting and receiving the third content via the application.

Also, the second display device 60 may configure a screen of the second display device with multi-views. For example, the second display device 60 may divide the screen into two views to display content to be watched together in one view and a chat window between the first user and the second user in the other view.

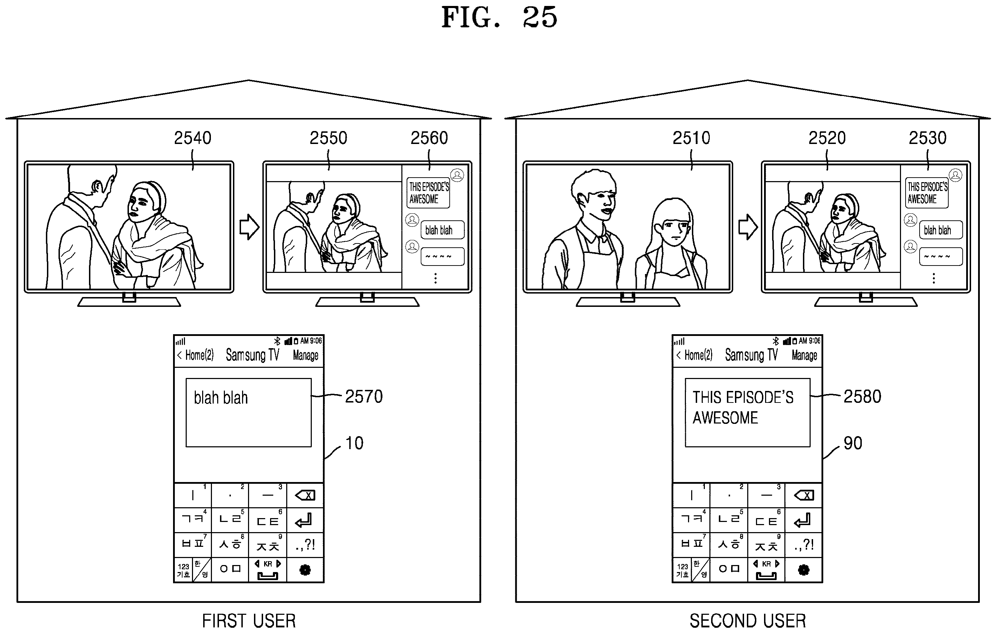

FIG. 25 illustrates an example of multi-view screens respectively displayed on a first display device of a first user and a second display device of a second user in response to a sharing request made by the first user to share content played on the first display device with the second user, according to an embodiment.

For example, referring to FIG. 25, while the second display device 90 is playing second content in a single view 2510 at the second user's house, the second display device 90 may configure the screen with multiple views so that two or more views may be displayed according to a multi-view configuration as in operation 2120. The second display device 90 may display first content to be watched together with the first user in at least one view 2520 among the multiple views, and display a window for chatting between the first user and the second user in at least one other view 2530.

In operation 2121, based on finding the chatting room matching the access key as a result of the search in operation 2117, the chatting server 50 may transmit, to the first display device 40, a confirmation signal for the request to watch together with the second user.

In operation 2122, in response to reception of the confirmation signal for the watch together request from the chatting server 50, the first display device 40 may configure its screen with multiple views, and display content in at least one view and a chat window in another view. For example, referring to FIG. 25, while a first display device 40 is playing first content on a single view 2540 at the first user's house, the first display device 10 may configure the screen with multiple views so that two or more views may be displayed. Furthermore, the first display device 40 may display the first content to be watched together with the second user in at least one view 2550 among the multiple views, and display a window for chatting between the first user and the second user in at least one other view 2560.

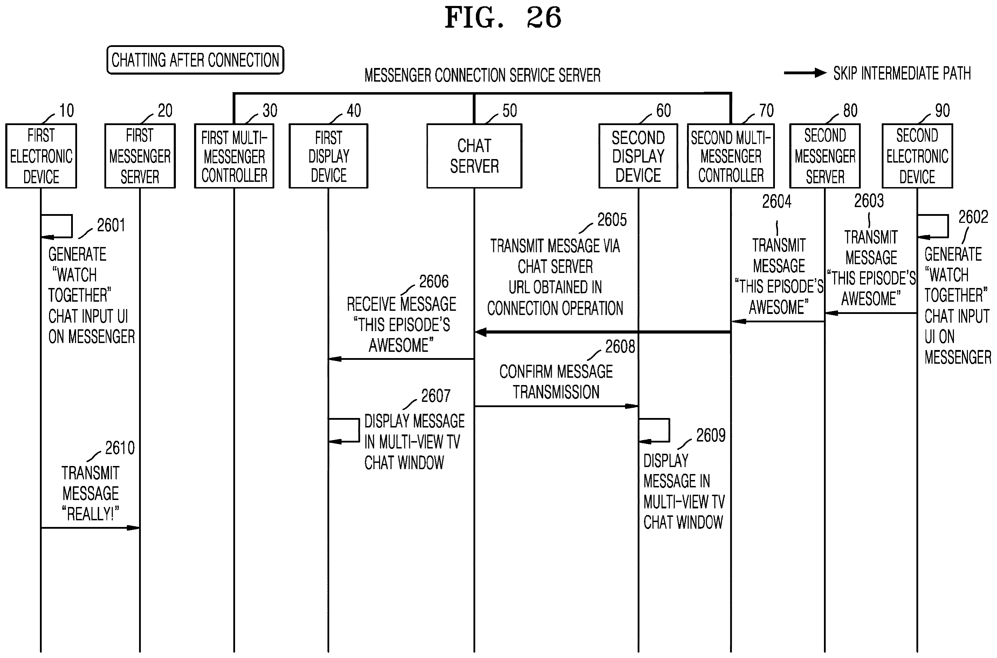

FIG. 26 is a flowchart illustrating a method of transmitting and receiving chat messages after creating a watch together chat window, according to an embodiment.

Referring to FIG. 26, in operation 2601, the first electronic device 10 may generate a watch together chat input user interface by using a first messenger system and output it on the screen. The watch together chat input user interface represents a user interface that allows the first user to perform a chat input to chat with the second user. In one example, the first electronic device 10 may output a message 2250 <Do you want to start a chat window for the shared video?> as shown in 2300C in FIG. 23, and then output a watch together chat input user interface when receiving a selection of <YES> from the first user in response to the message 2250. For example, the chat input user interface displayed by the first electronic device 10 may have a form of output from the first electronic device 10 as shown in FIG. 25.

In operation 2602, the second electronic device 90 may generate a watch together chat input user interface by using a second messenger system and output it on the screen. The watch together chat input user interface represents a user interface that allows the second user to perform a chat input to chat with the first user. The chat input user interface displayed by the second electronic device 90 may have a form of output from the second electronic device 90 as shown in FIG. 25.

In operation 2603, for example, when the second user of the second electronic device 90 inputs text <This episode's awesome> via the chat input user interface, the second electronic device 90 may transmit a message <This episode's awesome > to the second messenger server 80.

In operation 2604, the second messenger server 80 may transmit the received message to the second multi-messenger controller 70.

In operation 2605, the second multi-messenger controller 70 may transmit the received message to be provided to the generated chatting room by using the chatting server URL and chatting room URL obtained in the connection process shown in FIG. 21.

In operation 2606, the chatting server 50 may transmit the received message to the first display device 40.

In operation 2607, the first display device 40 may display the received message <This episode's awesome> in a chat window view among the multiple views in the screen of the first display device 40.

In operation 2608, the chatting server 50 may also transmit a confirmation message for the message received from the second display device 60.

In operation 2609, the second display device 60 that has received the confirmation message may display it in a chat window view among the multiple views in the screen of the second display device 60.

In operation 2610, even when the first user of the first electronic device 10 enters text <Really!> via the chat input user interface, the corresponding message may be displayed in the chat window view through the same process as used when the second user of the second electronic device previously transmitted the message.

While it has been described in the above example that a text chatting service is provided, it is also possible to provide a video chatting service by configuring metadata provided when connecting to a chatting service to include video information about each user.

In the example described above, the first messenger server and the second messenger server may both use the same messenger system or different messenger systems. Even when different messenger systems are used, the first display device and the second display device transmit and receive messages via a third chatting server, thereby enabling multi-messenger chatting.

Some embodiments may be implemented in the form of recording media including instructions executable by a computer, such as a program module executable by the computer. The computer-readable recording media may be any available media that are accessible by the computer, and include both volatile and non-volatile media and both removable and non-removable media. Furthermore, the computer-readable recording media may include computer storage media. The computer storage media include both volatile and non-volatile and both removable and non-removable media implemented in any method or technology for storage of information, such as computer-readable instructions, data structures, program modules, or other data.

Embodiments of the present disclosure may be implemented as a software program including instructions stored in computer-readable storage media.

A computer is a device configured to call a stored instruction from a storage medium and perform an operation according to an embodiment of the present disclosure in response to the called instruction, and may include an electronic device according to embodiments of the present disclosure.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium.

Furthermore, control methods according to the embodiments of the present disclosure may be included in the form of a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of a device or through an electronic market (e.g., Google Play Store ^{™} and App Store ^{™}). For such electronic distribution, at least a part of the software program may be stored on the storage medium or may be temporarily generated. In this case, the storage medium may be a storage medium of a server of the manufacturer, a server of the electronic market, or a relay server for temporarily storing the software program.

In a system consisting of a server and the device, the computer program product may include a storage medium of the server or a storage medium of the device. Alternatively, in a case where there is a third device (e.g., a smartphone) communicatively connected to the server or the device, the computer program product may include a storage medium of the third device. Alternatively, the computer program product may include a software program itself that is transmitted from the server to the device or the third device or that is transmitted from the third device to the device.

In this case, one of the server, the device, and the third device may execute the computer program product to perform methods according to embodiments of the present disclosure. Alternatively, two or more of the server, the device, and the third device may execute the computer program product to perform the methods according to the embodiments of the present disclosure in a distributed manner.

For example, the server (e.g., a cloud server or artificial intelligence (AI) server) may execute the computer program product stored therein to control the device communicatively connected to the server to perform the methods according to the embodiments of the present disclosure.

In another example, the third device may execute the computer program product to control the device communicatively connected to the third device to perform the methods according to the embodiments of the present disclosure. In a case where the third device executes the computer program product, the third device may download the computer program product from the server and execute the downloaded computer program product. Alternatively, the third device may execute the computer program product that is pre-loaded therein to perform the methods according to the embodiments of the present disclosure.

Also, in this specification, the term "unit" may be a hardware component such as a processor or circuit, and/or a software component executed by a hardware component such as a processor.

## Claims

1. A method of performing, in a server computing apparatus (400), a messenger connection control between an electronic device (300) and a display device (100), the method comprising:
receiving (510) a request for a connection to the display device from the electronic device via a messenger application (300a, 300b, 300c);
identifying (520) a type of the messenger application used for the connection request among one or more types of messenger applications;
performing authentication (530, 540) of the electronic device (300) and the display device (100);
based on the authentication of the electronic device (300) and the display device (100), generating (550) messenger connection information (223) including messenger identification information (2233) indicating the identified type of messenger application, user identification information (2231) for identifying a user using the messenger application on the electronic device (300), and connected device identification information (2232) for identifying the display device (100) to which the electronic device (300) is connected; and
performing (560), based on the generated messenger connection information (223), messenger connection control between the electronic device (300) and the display device (100), wherein the display device (100) stores profile information (143) corresponding to the messenger connection information (223) in order to respond to the message or control on operation of the display device (100)..

2. The method of claim 1, wherein
the performing of the authentication of the electronic device and the display device comprises:
receiving, from the electronic device, via the messenger application, an authentication number generated by the display device and output on a screen of the display device,
receiving, from the display device, the authentication number generated by the display device, and
determining whether the authentication number output from the display device matches the authentication number received from the electronic device.

3. The method of claim 1, further comprising:
receiving a message to be delivered to the display device from a user for whom the messenger connection information is generated;
processing the received message based on messenger identification information corresponding to the message; and
transmitting the processed message to the display device.

4. An operation method of a display device (100), the operation method comprising:
receiving a message transmitted by an electronic device (300) via a server computing apparatus (400),
identifying messenger connection information(223), including messenger identification information (2233) indicating a type of a messenger application, user identification information (2231) for identifying a user using the messenger application on the electronic device (300), and connected device identification information (2232) for identifying the display device (100), corresponding to a user who transmitted the message and the type of the messenger application used for the message;
obtaining stored profile information (143) corresponding to the identified messenger connection information (223); and
responding to the message or controlling an operation of the display device, based on the obtained profile information (143).

5. The operation method of claim 4, further comprising:
collecting, based on the messenger connection information, information about behavior of the user performed on the display device or information about an environment of the display device; and
generating, as the profile information corresponding to the messenger connection information, the collected information about the behavior of the user or information about the environment.

6. The operation method of claim 5, further comprising:
obtaining content information or advertisement information recommended based on the profile information corresponding to the messenger connection information regarding the user; and
transmitting a message relating to the recommended content information or advertisement information to the electronic device via the messenger application.

7. The operation method of claim 5, further comprising switching between a family mode in which the display device is not messenger-connected and a messenger connection mode in which the display device is messenger-connected to the user.

8. The operation method of claim 5, further comprising
switching to a messenger connection mode corresponding to the user in response to reception of the message from the user, from a family mode in which the display device is not messenger-connected or from a state in which the display device is messenger connected to another user,
wherein the switching further comprises:
obtaining messenger connection information regarding the user who transmitted the message, and
controlling an operation of the display device based on profile information corresponding to the messenger connection information regarding the user.

9. The operation method of claim 8, wherein the switching further comprises controlling the display device to automatically execute an application included in the profile information according to the profile information corresponding to the messenger connection information regarding the user.

10. The operation method of claim 9, wherein
the controlling of the display device comprises:
controlling an environment of the display device based on environment settings information included in the profile information or
performing automatic login to the application according to account login information included in the profile information.

11. The operation method of claim 7, wherein
the switching further comprises:
switching to the family mode based on the messenger connection being released while the display device is operating in the messenger connection mode, and
controlling the display device to change the environment of the display device based on default profile information corresponding to the family mode.

12. The operation method of claim 7, wherein the switching further comprises, in response to reception of a request to power off the display device while the display is operating in the messenger connection mode, controlling the display device to maintain the messenger connection mode when the display device is powered on within a predetermined time after power off or switch to the family mode when the display device is powered on after a lapse of the predetermined time.

13. The operation method of claim 7, further comprising:
in response to reception of a content sharing request message from the user during playback of content in the messenger connection mode, controlling generation of a chat room including metadata containing information about the played content;
sharing the metadata about the generated chat room on a counterpart display device of a counterpart user with whom to share the content; and
displaying, according to the sharing operation, a multi-view including a content play window and a chat window corresponding to the chat room.

14. A server computing apparatus (400) for performing messenger connection control between an electronic device (300) and a display device (100), the server computing apparatus comprising:
a communication interface (410) including a communication interface circuit;
a memory (420) storing one or more instructions; and
a processor (430) configured to execute the one or more instructions stored in the memory to:
receive a request for a connection to the display device from the electronic device via a messenger application (300a, 300b, 300c),
identify a type of the messenger application used for the connection request among one or more types of messenger applications,
perform authentication of the electronic device and the display device,
based on the authentication of the electronic device (300) and the display device (100), generate messenger connection information (223) including messenger identification information (2233) indicating the identified type of messenger application, user identification information (2231) for identifying a user using the messenger application on the electronic device, and connected device identification information (2232) for identifying the display device to which the electronic device (300) is connected, and
perform, based on the generated messenger connection information (223), a messenger connection control between the electronic device (300) and the display device (100), wherein the display device (100) stores profile information (143) corresponding to the messenger connection information (223) in order to respond to the message or control on operation of the display device (100).

15. A display device (100) comprising:
a communication interface including a communication interface circuit (110);
a memory storing one or more instructions (140); and
a processor (150) configured to execute the one or more instructions stored in the memory to:
receive a message transmitted by an electronic device (300) via a server computing apparatus (400),
identify messenger connection information (223), including messenger identification information (2233) indicating a type of a messenger application, user identification information (2231) for identifying a user using the messenger application on the electronic device (300), and connected device identification information (2232) for identifying the display device (100), corresponding to a user who transmitted the message and the type of the messenger application used for the message,
obtain stored profile information (143) corresponding to the identified messenger connection information (223), and
respond to the message or control an operation of the display device, based on the obtained profile information (143).

## Patentansprüche

1. Verfahren zum Durchführen, in einer Serverrecheneinrichtung (400), einer Messenger-Verbindungssteuerung zwischen einer elektronischen Vorrichtung (300) und einer Anzeigevorrichtung (100), wobei das Verfahren Folgendes umfasst:
Empfangen (510) einer Anforderung für eine Verbindung mit der Anzeigevorrichtung von der elektronischen Vorrichtung über eine Messenger-Anwendung (300a, 300b, 300c);
Identifizieren (520) eines Typs der Messenger-Anwendung, die für die Verbindungsanforderung verwendet wird, unter einem oder mehreren Typen von Messenger-Anwendungen;
Durchführen einer Authentifizierung (530, 540) der elektronischen Vorrichtung (300) und der Anzeigevorrichtung (100);
basierend auf der Authentifizierung der elektronischen Vorrichtung (300) und der Anzeigevorrichtung (100) Generieren (550) von Messenger-Verbindungsinformationen (223), die Messenger-Identifikationsinformationen (2233), die den identifizierten Typ der Messenger-Anwendung angeben, Benutzeridentifikationsinformationen (2231) zum Identifizieren eines Benutzers, der die Messenger-Anwendung auf der elektronischen Vorrichtung (300) verwendet, und Identifikationsinformationen (2232) der verbundenen Vorrichtung zum Identifizieren der Anzeigevorrichtung (100), mit der die elektronische Vorrichtung (300) verbunden ist, beinhalten; und
Durchführen (560), basierend auf den generierten Messenger-Verbindungsinformationen (223), einer Messenger-Verbindungssteuerung zwischen der elektronischen Vorrichtung (300) und der Anzeigevorrichtung (100), wobei die Anzeigevorrichtung (100) Profilinformationen (143) speichert, die den Messenger-Verbindungsinformationen (223) entsprechen, um auf die Nachricht oder Steuerung bei Betrieb der Anzeigevorrichtung (100) zu reagieren.

2. Verfahren nach Anspruch 1, wobei
das Durchführen der Authentifizierung der elektronischen Vorrichtung und der Anzeigevorrichtung Folgendes umfasst:
Empfangen, von der elektronischen Vorrichtung, über die Messenger-Anwendung, einer Authentifizierungsnummer, die durch die Anzeigevorrichtung generiert wird und auf einem Bildschirm der Anzeigevorrichtung ausgegeben wird,
Empfangen, von der Anzeigevorrichtung, der Authentifizierungsnummer, die durch die Anzeigevorrichtung generiert wird, und
Bestimmen, ob die Authentifizierungsnummer, die von der Anzeigevorrichtung ausgegeben wird, mit der Authentifizierungsnummer, die von der elektronischen Vorrichtung empfangen wird, übereinstimmt.

3. Verfahren nach Anspruch 1, ferner umfassend:
Empfangen einer Nachricht, die an die Anzeigevorrichtung zuzustellen ist, von einem Benutzer, für den die Messenger-Verbindungsinformationen generiert werden;
Verarbeiten der empfangenen Nachricht basierend auf Messenger-Identifikationsinformationen, die der Nachricht entsprechen; und
Übertragen der verarbeiteten Nachricht an die Anzeigevorrichtung.

4. Betriebsverfahren einer Anzeigevorrichtung (100), wobei das Betriebsverfahren Folgendes umfasst:
Empfangen einer Nachricht, die durch eine elektronische Vorrichtung (300) über eine Serverrecheneinrichtung (400) übertragen wird,
Identifizieren von Messenger-Verbindungsinformationen (223), die Messenger-Identifikationsinformationen (2233), die einen Typ einer Messenger-Anwendung angeben, Benutzeridentifikationsinformationen (2231) zum Identifizieren eines Benutzers, der die Messenger-Anwendung auf der elektronischen Vorrichtung (300) verwendet, und Identifikationsinformationen (2232) der verbundenen Vorrichtung zum Identifizieren der Anzeigevorrichtung (100), die einem Benutzer entsprechen, der die Nachricht übertragen hat, beinhalten, und des Typs der Messenger-Anwendung, die für die Nachricht verwendet wurde;
Erhalten gespeicherter Profilinformationen (143), die den identifizierten Messenger-Verbindungsinformationen (223) entsprechen; und
Reagieren auf die Nachricht oder Steuern eines Betriebs der Anzeigevorrichtung basierend auf den erhaltenen Profilinformationen (143).

5. Betriebsverfahren nach Anspruch 4, ferner umfassend:
Sammeln, basierend auf den Messenger-Verbindungsinformationen, von Informationen über das Verhalten des Benutzers, das auf der Anzeigevorrichtung durchgeführt wird, oder von Informationen über eine Umgebung der Anzeigevorrichtung; und
Generieren, als die Profilinformationen, die den Messenger-Verbindungsinformationen entsprechen, der gesammelten Informationen über das Verhalten des Benutzers oder Informationen über die Umgebung.

6. Betriebsverfahren nach Anspruch 5, ferner umfassend:
Erhalten von Inhaltsinformationen oder Werbeinformationen, die basierend auf den Profilinformationen, die den Messenger-Verbindungsinformationen hinsichtlich des Benutzers entsprechen, empfohlen werden; und
Übertragen einer Nachricht in Bezug auf die empfohlenen Inhaltsinformationen oder Werbeinformationen an die elektronische Vorrichtung über die Messenger-Anwendung.

7. Betriebsverfahren nach Anspruch 5, ferner umfassend das Umschalten zwischen einem Familienmodus, in dem die Anzeigevorrichtung nicht über Messenger verbunden ist, und einem Messenger-Verbindungsmodus, in dem die Anzeigevorrichtung über Messenger mit dem Benutzer verbunden ist.

8. Betriebsverfahren nach Anspruch 5, ferner umfassend
das Umschalten in einen Messenger-Verbindungsmodus, der dem Benutzer entspricht, als Reaktion auf den Empfang der Nachricht von dem Benutzer, von einem Familienmodus, in dem die Anzeigevorrichtung nicht über Messenger verbunden ist, oder von einem Zustand, in dem die Anzeigevorrichtung über Messenger mit einem anderen Benutzer verbunden ist,
wobei das Umschalten ferner Folgendes umfasst:
Erhalten von Messenger-Verbindungsinformationen hinsichtlich des Benutzers, der die Nachricht übertragen hat, und
Steuern eines Betriebs der Anzeigevorrichtung basierend auf Profilinformationen, die den Messenger-Verbindungsinformationen hinsichtlich des Benutzers entsprechen.

9. Betriebsverfahren nach Anspruch 8, wobei das Umschalten ferner das Steuern der Anzeigevorrichtung zum automatischen Ausführen einer Anwendung, die in den Profilinformationen beinhaltet ist, gemäß den Profilinformationen, die den Messenger-Verbindungsinformationen hinsichtlich des Benutzers entsprechen, umfasst.

10. Betriebsverfahren nach Anspruch 9, wobei
das Steuern der Anzeigevorrichtung Folgendes umfasst:
Steuern einer Umgebung der Anzeigevorrichtung basierend auf Umgebungseinstellungsinformationen, die in den Profilinformationen beinhaltet sind, oder
Durchführen der automatischen Anmeldung bei der Anwendung gemäß den Kontoanmeldeinformationen, die in den Profilinformationen beinhaltet sind.

11. Betriebsverfahren nach Anspruch 7, wobei
das Umschalten ferner Folgendes umfasst:
Umschalten in den Familienmodus basierend darauf, dass die Messenger-Verbindung freigegeben wird, während die Anzeigevorrichtung im Messenger-Verbindungsmodus arbeitet, und
Steuern der Anzeigevorrichtung zum Ändern der Umgebung der Anzeigevorrichtung basierend auf Standardprofilinformationen, die dem Familienmodus entsprechen.

12. Betriebsverfahren nach Anspruch 7, wobei das Umschalten ferner als Reaktion auf den Empfang einer Anforderung zum Ausschalten der Anzeigevorrichtung, während die Anzeige in dem Messenger-Verbindungsmodus arbeitet, das Steuern der Anzeigevorrichtung zum Beibehalten des Messenger-Verbindungsmodus, wenn die Anzeigevorrichtung innerhalb einer vorbestimmten Zeit nach dem Ausschalten eingeschaltet wird, oder das Umschalten in den Familienmodus, wenn die Anzeigevorrichtung nach einem Ablauf der vorbestimmten Zeit eingeschaltet wird, umfasst.

13. Betriebsverfahren nach Anspruch 7, ferner umfassend:
als Reaktion auf den Empfang einer Anforderungsnachricht zum gemeinsamen Benutzen von Inhalt von dem Benutzer während der Wiedergabe von Inhalt im Messenger-Verbindungsmodus Steuern der Generierung eines Chatrooms, der Metadaten beinhaltet, die Informationen über den abgespielten Inhalt enthalten;
gemeinsames Benutzen der Metadaten über den generierten Chatroom auf einer Gegenpartanzeigevorrichtung eines Gegenpartbenutzers, mit dem der Inhalt gemeinsam benutzt werden soll; und
Anzeigen, gemäß dem Vorgang zum gemeinsamen Benutzen, einer Mehrfachansicht, die ein Inhaltswiedergabefenster und ein Chatfenster, das dem Chatraum entspricht, beinhaltet.

14. Serverrecheneinrichtung (400) zum Durchführen einer Messenger-Verbindungssteuerung zwischen einer elektronischen Vorrichtung (300) und einer Anzeigevorrichtung (100), wobei die Serverrecheneinrichtung Folgendes umfasst:
eine Kommunikationsschnittstelle (410), die eine Kommunikationsschnittstellenschaltung beinhaltet;
einen Speicher (420), der eine oder mehrere Anweisungen speichert; und
einen Prozessor (430), der dazu konfiguriert ist, die eine oder mehreren in dem Speicher gespeicherten Anweisungen zu Folgendem auszuführen:
Empfangen einer Anforderung für eine Verbindung mit der Anzeigevorrichtung von der elektronischen Vorrichtung über eine Messenger-Anwendung (300a, 300b, 300c),
Identifizieren eines Typs der Messenger-Anwendung, die für die Verbindungsanforderung verwendet wird, unter einem oder mehreren Typen von Messenger-Anwendungen,
Durchführen einer Authentifizierung der elektronischen Vorrichtung und der Anzeigevorrichtung,
basierend auf der Authentifizierung der elektronischen Vorrichtung (300) und der Anzeigevorrichtung (100) Generieren von Messenger-Verbindungsinformationen (223), die Messenger-Identifikationsinformationen (2233), die den identifizierten Typ der Messenger-Anwendung angeben, Benutzeridentifikationsinformationen (2231) zum Identifizieren eines Benutzers, der die Messenger-Anwendung auf der elektronischen Vorrichtung verwendet, und Identifikationsinformationen (2232) der verbundenen Vorrichtung zum Identifizieren der Anzeigevorrichtung, mit der die elektronische Vorrichtung (300) verbunden ist, beinhalten, und
Durchführen, basierend auf den generierten Messenger-Verbindungsinformationen (223), einer Messenger-Verbindungssteuerung zwischen der elektronischen Vorrichtung (300) und der Anzeigevorrichtung (100), wobei die Anzeigevorrichtung (100) Profilinformationen (143) speichert, die den Messenger-Verbindungsinformationen (223) entsprechen, um auf die Nachricht oder Steuerung bei Betrieb der Anzeigevorrichtung (100) zu reagieren.

15. Anzeigevorrichtung (100), umfassend:
eine Kommunikationsschnittstelle, die eine Kommunikationsschnittstellenschaltung (110) beinhaltet;
einen Speicher, der eine oder mehrere Anweisungen (140) speichert; und
einen Prozessor (150), der dazu konfiguriert ist, die eine oder mehreren Anweisungen, die in dem Speicher gespeichert sind, zu Folgendem auszuführen:
Empfangen einer Nachricht, die durch eine elektronische Vorrichtung (300) über eine Serverrecheneinrichtung (400) übertragen wird,
Identifizieren von Messenger-Verbindungsinformationen (223), die Messenger-Identifikationsinformationen (2233), die einen Typ einer Messenger-Anwendung angeben, Benutzeridentifikationsinformationen (2231) zum Identifizieren eines Benutzers, der die Messenger-Anwendung auf der elektronischen Vorrichtung (300) verwendet, und Identifikationsinformationen (2232) der verbundenen Vorrichtung zum Identifizieren der Anzeigevorrichtung (100), die einem Benutzer entsprechen, der die Nachricht übertragen hat, beinhalten, und des Typs der Messenger-Anwendung, die für die Nachricht verwendet wurde,
Erhalten gespeicherter Profilinformationen (143), die den identifizierten Messenger-Verbindungsinformationen (223) entsprechen, und
Reagieren auf die Nachricht oder Steuern eines Betriebs der Anzeigevorrichtung basierend auf den erhaltenen Profilinformationen (143).

## Revendications

1. Procédé de réalisation, dans un appareil informatique serveur (400), d'une commande de connexion de messagerie entre un dispositif électronique (300) et un dispositif d'affichage (100), le procédé comprenant :
la réception (510) d'une demande de connexion au dispositif d'affichage à partir du dispositif électronique par l'intermédiaire d'une application de messagerie (300a, 300b, 300c) ;
l'identification (520) d'un type de l'application de messagerie utilisée pour la demande de connexion parmi un ou plusieurs types d'applications de messagerie ;
la réalisation d'une authentification (530, 540) du dispositif électronique (300) et du dispositif d'affichage (100) ;
sur la base de l'authentification du dispositif électronique (300) et du dispositif d'affichage (100), la génération (550) d'informations de connexion de messagerie (223) comprenant des informations d'identification de messagerie (2233) indiquant le type identifié d'application de messagerie, des informations d'identification d'utilisateur (2231) destinées à identifier un utilisateur utilisant l'application de messagerie sur le dispositif électronique (300), et des informations d'identification de dispositif connecté (2232) destinées à identifier le dispositif d'affichage (100) auquel le dispositif électronique (300) est connecté ; et
la réalisation (560), sur la base des informations de connexion de messagerie générées (223), d'une commande de connexion de messagerie entre le dispositif électronique (300) et le dispositif d'affichage (100), ledit dispositif d'affichage (100) stockant des informations de profil (143) correspondant aux informations de connexion de messagerie (223) afin de répondre au message ou à la commande sur le fonctionnement du dispositif d'affichage (100).

2. Procédé selon la revendication 1, ladite réalisation de l'authentification du dispositif électronique et du dispositif d'affichage comprenant :
la réception, en provenance du dispositif électronique, par l'intermédiaire de l'application de messagerie, d'un numéro d'authentification généré par le dispositif d'affichage et délivré sur un écran du dispositif d'affichage,
la réception, en provenance du dispositif d'affichage, du numéro d'authentification généré par le dispositif d'affichage, et
la détermination pour savoir si la sortie de numéro d'authentification du dispositif d'affichage correspond au numéro d'authentification reçu du dispositif électronique.

3. Procédé selon la revendication 1, comprenant en outre :
la réception d'un message destiné à être délivré au dispositif d'affichage par un utilisateur pour lequel les informations de connexion de messagerie sont générées ;
le traitement du message reçu sur la base des informations d'identification de messager correspondant au message ; et
la transmission du message traité au dispositif d'affichage.

4. Procédé de fonctionnement d'un dispositif d'affichage (100), le procédé de fonctionnement comprenant :
la réception d'un message transmis par un dispositif électronique (300) par l'intermédiaire d'un appareil informatique serveur (400),
l'identification d'informations de connexion de messagerie (223), comprenant des informations d'identification de messagerie (2233) indiquant un type d'application de messagerie, des informations d'identification d'utilisateur (2231) destinées à identifier un utilisateur utilisant l'application de messagerie sur le dispositif électronique (300), et des informations d'identification de dispositif connecté (2232) destinées à identifier le dispositif d'affichage (100), correspondant à un utilisateur qui a transmis le message et le type de l'application de messagerie utilisée pour le message ;
l'obtention d'informations de profil stockées (143) correspondant aux informations de connexion de messagerie identifiées (223) ; et
la réponse au message ou la commande d'un fonctionnement du dispositif d'affichage, sur la base des informations de profil obtenues (143).

5. Procédé de fonctionnement selon la revendication 4, comprenant en outre :
la collecte, sur la base des informations de connexion de messagerie, des informations sur le comportement de l'utilisateur effectué sur le dispositif d'affichage ou des informations sur un environnement du dispositif d'affichage ; et
la génération, en tant qu'informations de profil correspondant aux informations de connexion de messagerie, des informations collectées sur le comportement de l'utilisateur ou des informations sur l'environnement.

6. Procédé de fonctionnement selon la revendication 5, comprenant en outre :
l'obtention d'informations de contenu ou d'informations publicitaires recommandées sur la base des informations de profil correspondant aux informations de connexion de messagerie concernant l'utilisateur ; et
la transmission d'un message relatif aux informations de contenu recommandées ou aux informations publicitaires au dispositif électronique par l'intermédiaire de l'application de messagerie.

7. Procédé de fonctionnement selon la revendication 5, comprenant en outre la commutation entre un mode de famille dans lequel le dispositif d'affichage n'est pas connecté par messagerie et un mode de connexion par messagerie dans lequel le dispositif d'affichage est connecté par messagerie à l'utilisateur.

8. Procédé de fonctionnement selon la revendication 5, comprenant en outre la commutation vers un mode de connexion de messagerie correspondant à l'utilisateur en réponse à la réception du message de l'utilisateur, depuis un mode famille dans lequel le dispositif d'affichage n'est pas connecté à une messagerie ou depuis un état dans lequel le dispositif d'affichage est connecté à une messagerie à un autre utilisateur,
ladite commutation comprenant en outre :
l'obtention d'informations de connexion de messagerie concernant l'utilisateur qui a transmis le message, et
la commande d'un fonctionnement du dispositif d'affichage sur la base d'informations de profil correspondant aux informations de connexion de messagerie concernant l'utilisateur.

9. Procédé de fonctionnement selon la revendication 8, ladite commutation comprenant en outre la commande du dispositif d'affichage pour exécuter automatiquement une application incluse dans les informations de profil selon les informations de profil correspondant aux informations de connexion de messagerie concernant l'utilisateur.

10. Procédé de fonctionnement selon la revendication 9, ladite commande du dispositif d'affichage comprenant :
la commande d'un environnement du dispositif d'affichage sur la base d'informations de paramètres d'environnement incluses dans les informations de profil ou
la réalisation d'une connexion automatique à l'application en fonction des informations de connexion de compte incluses dans les informations de profil.

11. Procédé de fonctionnement selon la revendication 7, ladite commutation comprenant en outre :
la commutation vers le mode famille en fonction de la libération de la connexion de messagerie pendant que le dispositif d'affichage fonctionne dans le mode de connexion de messagerie, et
la commande du dispositif d'affichage pour modifier l'environnement du dispositif d'affichage sur la base d'informations de profil par défaut correspondant au mode famille.

12. Procédé de fonctionnement selon la revendication 7, ladite commutation comprenant en outre, en réponse à la réception d'une demande de mise hors tension du dispositif d'affichage pendant que l'affichage fonctionne dans le mode de connexion de messagerie, la commande au dispositif d'affichage de maintenir le mode de connexion de messagerie lorsque le dispositif d'affichage est mis sous tension dans un laps de temps prédéfini après la mise hors tension ou la commutation vers le mode famille lorsque le dispositif d'affichage est mis sous tension après un laps de temps prédéfini.

13. Procédé de fonctionnement selon la revendication 7, comprenant en outre :
en réponse à la réception d'un message de demande de partage de contenu de l'utilisateur pendant la lecture du contenu dans le mode de connexion de messagerie, la commande de la génération d'un salon de discussion comprenant des métadonnées contenant des informations sur le contenu lu ;
le partage des métadonnées concernant la salle de discussion générée sur un dispositif d'affichage homologue d'un utilisateur homologue avec lequel partager le contenu ; et l'affichage, selon l'opération de partage, d'une multi-vue comprenant une fenêtre de lecture de contenu et une fenêtre de discussion correspondant au salon de discussion.

14. Appareil informatique serveur (400) permettant d'effectuer une commande de connexion de messagerie entre un dispositif électronique (300) et un dispositif d'affichage (100), l'appareil informatique serveur comprenant :
une interface de communication (410) comprenant un circuit d'interface de communication ;
une mémoire (420) stockant une ou plusieurs instructions ; et
un processeur (430) configuré pour exécuter l'une ou plusieurs instructions stockées dans la mémoire pour :
recevoir une demande de connexion au dispositif d'affichage à partir du dispositif électronique par l'intermédiaire d'une application de messagerie (300a, 300b, 300c),
identifier un type de l'application de messagerie utilisée pour la demande de connexion parmi un ou plusieurs types d'applications de messagerie,
réaliser l'authentification du dispositif électronique et du dispositif d'affichage,
sur la base de l'authentification du dispositif électronique (300) et du dispositif d'affichage (100), générer des informations de connexion de messagerie (223) comprenant des informations d'identification de messagerie (2233) indiquant le type identifié d'application de messagerie, des informations d'identification d'utilisateur (2231) destinées à identifier un utilisateur utilisant l'application de messagerie sur le dispositif électronique, et des informations d'identification de dispositif connecté (2232) destinées à identifier le dispositif d'affichage auquel le dispositif électronique (300) est connecté, et
réaliser, sur la base des informations de connexion de messagerie générées (223), une commande de connexion de messagerie entre le dispositif électronique (300) et le dispositif d'affichage (100), ledit dispositif d'affichage (100) stockant des informations de profil (143) correspondant aux informations de connexion de messagerie (223) afin de répondre au message ou à la commande sur le fonctionnement du dispositif d'affichage (100).

15. Dispositif d'affichage (100), comprenant :
une interface de communication comprenant un circuit d'interface de communication (110) ;
une mémoire stockant une ou plusieurs instructions (140) ; et
un processeur (150) configuré pour exécuter la ou les instructions stockées dans la mémoire pour :
recevoir un message transmis par un dispositif électronique (300) par l'intermédiaire d'un appareil informatique serveur (400),
identifier des informations de connexion de messagerie d'identification (223), comprenant des informations d'identification de messagerie (2233) indiquant un type d'application de messagerie, des informations d'identification d'utilisateur (2231) destinées à identifier un utilisateur utilisant l'application de messagerie sur le dispositif électronique (300), et des informations d'identification de dispositif connecté (2232) destinées à identifier le dispositif d'affichage (100), correspondant à un utilisateur qui a transmis le message et le type de l'application de messagerie utilisée pour le message,
obtenir des informations de profil stockées (143) correspondant aux informations de connexion de messagerie identifiées (223), et
répondre au message ou commander un fonctionnement du dispositif d'affichage, sur la base des informations de profil obtenues (143).
